# EUROPEAN PATENT APPLICATION

(11) **EP 4 809 979 A2**
(43) Date of publication of application: **23.09.2026**
(21) Application number: 26190556.6
(22) Date of filing: 05.07.2023
(51) Int. Cl.: A61C 13/00

(54) **A METHOD FOR PREPARING A DENTAL PROSTHESIS**

(30) Priority: 05.07.2022 EP 22183158; 08.03.2023 EP 23160650
(62) Document number(s) of the earlier application(s) in accordance with Art. 76 EPC: 23735069.9 / 4 551 151
(71) Applicant: Institut Straumann AG, 4052 Basel (CH)
(72) Inventor: FISCHLER, Felix, 68220 Hagenthal-le-Haut (FR); GÜNTER, Daniel, 4437 Waldenburg (CH); MARTIN VILLAREJO, Boris, 4106 Therwil (CH); ZETTLER, Marc, 4125 Riehen (CH)
(74) Representative: EIP

(57) **Abstract**

A method is disclosed, for preparing a dental prosthesis. The method comprises performing a first scan of a plurality of scannable temporary abutments comprising the respective scannable member arranged on a respective dental implant. The method comprises performing a second scan of an interim prosthesis arranged on the plurality of scannable temporary abutments comprising the respective scannable member. The method comprises generating, using a computer aided design, CAD, software, a model of a final prosthesis based on the first scan and the second scan.

## Description

The present disclosure pertains to the field of restorative dentistry. The present disclosure relates to a method for preparing a dental prosthesis and a related scannable temporary abutment.

### BACKGROUND

Edentulism or toothlessness is a worldwide public health issue. Edentulism can occur because of biologic disease processes, such as dental caries, periodontal diseases, trauma, and oral cancer. Edentulism is accompanied by several comorbidities that can significantly influence an individual. As the anticipated life expectancy increases, it will likely continue to have high prevalence in the future. Complete-arch implant prostheses have been widely used in restorative dentistry to restore the smile of an edentulous and/or semi-edentulous patient.

Digital technology has been introduced in restorative dentistry to provide accurate digital implant impressions. During fixed implant rehabilitation and prior to fabrication of a prosthesis prototype, complete-arch impressions using digital scanning may be performed. Namely, a plurality of intraoral scans can be performed to determine three-dimensional implant positions and contours of an interim prosthesis. However, a superimposition of the plurality of data sets generated by the plurality of scans to generate a model of the interim prosthesis provides a major challenge. This has been attributed to an absence of stable intraoral landmarks when performing the scans. Certain techniques have been described in an effort to overcome this obstacle including the use of self-adhesive fiducial markers, scanposts and/or surgical anchorage pins.

However, the suggested techniques are tedious. They require a large number of intraoral scans and intervention on the patient, as the fiducial markers and/or surgical pins needs to be placed, then a plurality of scans need to be performed to obtain a good digital image of the patient's mouth, and finally the fiducial markers and/or surgical pins will be removed and the interim prosthesis inserted. Self-adhesive fiducial markers are just placed onto the soft tissue not anchored; therefore, they might move between scans rendering the image not readily useable/accurate, obliging the dentist to redo scans and increasing the time the patient has to spend on the dentist chair. Surgical pins, due to their reflective surface, are less recognizable by the scanner, thus increasing the number of scans needed to acquire a useable image. This is both time consuming and unpleasant for the edentulous and/or semi-edentulous patient.

Other methods for performing intraoral scans to generate a model of an edentulous patient's jaws are also known. For example, Marini et al. (J. Prosthotontics, 2021, 0, 1) describes a method wherein a scanbody comprising a long scannable screw mounted on a scanpost configured to receive said screw is used for performing a first soft tissue scan. Once the first scan is complete, the long scannable screw and the scanpost are removed. Then, a temporary abutment is installed, and the interim denture is then mounted and secured on the temporary abutments with the long scannable screws, and a second scan is performed with the interim denture. After the second scan has been performed, the scannable screw is removed and replaced with a regular prosthetic screw before the patient can leave with the interim prosthesis. Every removal and insertion of devices, such as of the scanbody, the temporary abutment, and the prosthetic screw requires intraoral intervention on the patient which can be time consuming, unpleasant for the patient, and which may damage the surface of the patient's soft tissue which is yet not healed, requiring longer healing time before providing the final prosthesis.

### SUMMARY

Accordingly, there is a need for methods and devices for preparing a dental prosthesis, which may mitigate, alleviate or address the existing shortcomings, provide a less time consuming and more accurate method for preparing a dental prosthesis, while increasing the comfort for the patient and reducing the time the patient spends on the dental chair.

A method is disclosed, for preparing a dental prosthesis. The method comprises arranging a plurality of temporary abutments comprising a respective scannable member onto a respective dental implant. The method comprises performing a first scan of the plurality of temporary abutments comprising the respective scannable member. The method comprises arranging an interim prosthesis onto the dental implant using the plurality of temporary abutments comprising the respective scannable member. The method comprises performing a second scan on the interim prosthesis arranged on the plurality of temporary abutments comprising the respective scannable member. The method comprises generating, using a computer aided design, CAD, software, a model of a final prosthesis based on the first scan and the second scan.

A scannable temporary abutment for determining a position of a dental implant is disclosed. The scannable temporary abutment comprises a temporary abutment and a scannable member, said scannable temporary abutment being configured to be mounted to a dental implant.

A kit is disclosed, the kit comprising a scannable member and a screw for securing the scannable member to a temporary abutment.

It is an advantage of the present disclosure that the accuracy and speed of the scanning method can be increased, while reducing the chair time for the patient. By arranging a scannable temporary abutment, such as a temporary abutment comprising a scannable member, on the dental implant, the scan may be performed on the same temporary abutment as used for securing the interim prosthesis to the dental implant. Therefore, additional fiducial markers, scanposts and/or surgical anchorage pins are no longer required and the patient's soft tissue is less stressed thus providing a faster healing of the soft tissue. The additional step of replacing the fiducial markers, scanposts and/or surgical anchorage pins with the temporary abutment after the scans have been performed may thus be rendered obsolete, and thus reducing the number of steps of the overall method. By using a scannable temporary abutment, the scannable member may be removed after the scans have been performed and the interim prosthesis may remain on the dental implant. This reduces the number of intraoral interventions required for preparing the dental prosthesis and reduces any damage to the patient's soft tissue caused by mounting and removing parts during scanning. Furthermore, a scanner used for performing the scans, such as a scanning device, is sometimes distracted by soft tissue during an edentulous and/or semi-edentulous scan and errors in stitching of the images can occur during the scanning. The current disclosure can overcome this issue since the scanner can be guided by a morphology of the teeth of the interim prosthesis, and therefore can stitch the images faster, with a higher accuracy and with less deviation. Accordingly, additional scans and/or additional post-processing of the scanned images can thus be reduced or may no longer be required, which further reduces the time required to prepare a model of the interim prosthesis and preparing the final dental prosthesis. In addition, using the temporary denture in the method allows a better preparation and adaptation of the final prosthesis. The temporary denture can be used to evaluate esthetics and phonetics. In cases where the temporary denture does not adapt well to the tissue or the esthetic or occlusal modifications needed are minor, they can be addressed chairside directly on the prototype and the modified prototype can then be rescanned as a reference for fabrication of the definitive prosthesis. The time efficiency of the method can be financially beneficial for all parties involved (i.e. the patient, the dentist, the dental clinician, and clinical lab).

### BRIEF DESCRIPTION OF THE DRAWINGS

The above and other features and advantages of the present disclosure will become readily apparent to those skilled in the art by the following detailed description of the examples thereof with reference to the attached drawings, in which:
Fig. 1A is a flow-chart illustrating an example method preparing a dental prosthesis according to this disclosure,
Fig. 1B illustrates an example first scan using a scannable temporary abutment according to this disclosure,
Fig. 1C illustrates an example second scan using a scannable temporary abutment according to this disclosure,
Figs. 2A-2C illustrate an example scannable member according to one or more first examples according to this disclosure,
Figs. 3A-3E illustrate an example scannable member according to one or more second examples according to this disclosure,
Figs. 4A-4E illustrate an example scannable member according to one or more third examples according to this disclosure,
Figs. 5A-5F illustrate an example scannable member according to one or more fourth examples according to this disclosure,
Figs. 6A-6D illustrate an example scannable temporary abutment according to one or more first examples according to this disclosure,
Figs. 7A-7C illustrate an example kit comprising a scannable member and a screw according to this disclosure,
Figs. 8A-8B illustrate a scannable member being configured to be clipped onto the abutment according to one or more examples of this disclosure,
Fig. 9 illustrates a body of a scannable member being configured to be releasably secured to a base of a scannable member according to one or more examples of this disclosure,
Figs. 10A-10C illustrate a scannable member according to one or more examples of this disclosure,
Figs. 11A-11C illustrate a scannable member according to one or more examples of this disclosure,
Fig. 12 is a block diagram illustrating an example scanner according to this disclosure, and
Fig. 13 is a block diagram illustrating an example computer controlled manufacturing tool according to this disclosure.

### DETAILED DESCRIPTION

Various examples and details are described hereinafter, with reference to the figures when relevant. It should be noted that the figures may or may not be drawn to scale and that elements of similar structures or functions are represented by like reference numerals throughout the figures. It should also be noted that the figures are only intended to facilitate the description of the examples. They are not intended as an exhaustive description of the disclosure or as a limitation on the scope of the disclosure. In addition, an illustrated example needs not have all the aspects or advantages shown. An aspect or an advantage described in conjunction with a particular example is not necessarily limited to that example and can be practiced in any other examples even if not so illustrated, or if not so explicitly described.

The current disclosure provides a method which improves the quality of the model and the patient's comfort during the process. A method for preparing a dental prosthesis is disclosed. The method may be performed by a dental prosthesis manufacturing system. The dental prosthesis manufacturing system may comprise a scanner, such as an intraoral scanner, and a computer controlled manufacturing tool, such as a 3D-printer, a lathing machine and/or a casting machine. The scanner may comprise a memory circuitry, processor circuitry, imaging circuitry and an interface. The computer controlled manufacturing tool may comprise a memory circuitry, processor circuitry, and an interface. The method comprises arranging a plurality of scannable temporary abutments, such as a plurality of temporary abutments comprising a respective scannable member, onto a respective dental implant. A dental implant is a medical device that is surgically implanted into the jaw of an edentulous and/or semi-edentulous person, such as a person missing one or more teeth, to restore the person's ability to chew or their appearance. The dental implant provides support for artificial teeth, such as prosthesis, crowns, bridges, or dentures. The temporary abutment is configured to secure the interim prosthesis to a dental implant. Temporary can be seen as the abutment being configured to secure the interim prosthesis to the dental implant for only a limited period of time, until the final prosthesis is ready to be mounted to the patient's jaw. In other words, the temporary abutment is not configured to be permanently secured to the dental implant. The temporary abutment is configured to stay in the edentulous and/or semi-edentulous patient's mouth when the interim prosthesis is in place. Interim prosthesis can be seen as the prosthesis being a temporary prosthesis configured to be arranged on the dental implant for only a limited period of time, such as until a final prosthesis has been produced.

In one or more example methods, arranging the plurality of temporary abutments comprising the respective scannable member comprises arranging the plurality of temporary abutments onto the respective dental implant and subsequently arranging a plurality of scannable members onto a respective temporary abutment. In one or more example methods, arranging the plurality of temporary abutments comprising the respective scannable members comprise arranging a scannable member onto a respective temporary abutment of the plurality of temporary abutments. In one or more example methods arranging the scannable member onto the respective temporary abutment of the plurality of temporary abutments comprise screwing the scannable member onto the respective temporary abutment. In one or more examples, the scannable member may comprise a first mating surface configured to mate with a second mating surface of the temporary abutment. The first mating surface may be a first thread, such as an inner or outer thread, configured to thread into a corresponding second thread in the temporary abutment. The second mating surface may be the second thread. In one or more examples, the scannable member may be configured to receive a screw. The screw may be configured to thread into the temporary abutment. The scannable member may, for example, comprise a through-going hole (such as a lumen) for receiving the screw. The screw may be a prosthetic screw configured to secure the interim prosthesis to the dental implant without interfering with the patient wearing the interim prosthesis. The prosthetic screw may be configured to not protrude outside the temporary abutment when the temporary abutment is secured to the dental implant using the screw.

In one or more example methods arranging each of the scannable members onto the respective temporary abutment of the plurality of temporary abutments comprises clipping the scannable member onto the respective temporary abutment.

In one or more example methods, the scannable member may be an integral part of the temporary abutment. The method may thus comprise arranging a plurality of temporary abutments with integral scannable members onto a respective dental implant. In one or more example methods, the dental implant may be a dental implant implanted in a patient's mouth.

The method comprises performing a first scan of the plurality of temporary abutments comprising the respective scannable member. The first scan is performed to obtain information related to the one or more dental implants, such as reference coordinates for the one or more dental implants, that may be provided to a computer aided design (CAD) and/or computer aided manufacturing (CAM) software. The first scan may be a three-dimensional (3D) scan. The first scan may be performed using an intraoral scanner. The intraoral scanner may scan the plurality of scannable members to generate information indicative of a location of the one or more dental implants in the mouth of an edentulous and/or semi-edentulous patient. During the first scan a first data set is provided. The first data set may be indicative of one or more of implant reference coordinates and a morphology of a jawbone of the edentulous and/or semi-edentulous patient, such as a morphology of a maxillary and/or a mandibular bone of the edentulous and/or semi-edentulous patient.

In one or more example methods, performing the first scan comprises obtaining first scan data, such as the first data set, indicative of the plurality of scannable temporary abutments comprising the respective scannable member arranged on the respective dental implant. The first scan data can be obtained using the scanner, such as the scanning device. In one or more examples, the scanner, such as the scanning device, comprises memory circuitry, processor circuitry, imaging circuitry and an interface. The scanner may be configured to perform any of the methods disclosed herein. In other words, the scanner may be configured to perform the first scan, such as may be configured to obtain, for example using the imaging circuitry and/or the memory circuitry, the first scan data indicative of the plurality of scannable temporary abutments comprising the respective scannable member arranged on the respective dental implant.

In one or more example methods, the method comprises arranging an interim prosthesis onto the dental implant using the plurality of temporary abutments comprising the respective scannable member. Advantageously, the plurality of temporary abutments do not need to be removed for arranging the interim prosthesis. The interim prosthesis is a temporary dental appliance that replaces one or more missing teeth or covers up tooth defects. In other words, the interim prosthesis may be a replacement set of teeth. The interim prosthesis is a prosthesis that can be used temporarily by the patient until a final, such as a permanent, prosthesis providing a better fit and increased comfort than the interim prosthesis has been produced. The interim prosthesis is configured to be worn for a limited time, such as for bridging the gap from removal of the patient's actual teeth until finalization of the final prosthesis. The final prosthesis has a better durability and is configured to be worn for several years. The interim prosthesis and/or the temporary prosthesis may be one or more of an implant, a crown, a bridge, a denture, and a veneer. In one or more example prosthesis, the interim prosthesis can be removable or permanently fixed in the mouth of an edentulous and/or semi-edentulous patient. In one or more example methods, arranging the interim prosthesis onto the dental implant comprises embedding the plurality of temporary abutments into the interim prosthesis. The plurality of temporary abutments may be embedded into interim prosthesis by gluing and/or cementing, or otherwise attaching, the temporary abutment to the interim prosthesis.

The interim prosthesis may be arranged onto the dental implant by providing an interim prosthesis, such as a temporary denture, having preformed holes that are large enough and positioned so that the interim prosthesis can be inserted on top of the plurality of temporary abutments. The interim prosthesis may comprise one hole for each temporary abutment. In one or more example methods, the position of the holes in the interim prosthesis may be determined based on the information indicative of the location of the one or more dental implants, such as the implant reference coordinates, obtained from the first scan. In one or more example methods, the position of the holes may be obtained from moulds that are made prior to implant insertion in the patient's mouth. Thereafter, the temporary abutment and the interim prosthesis are mounted together and said holes may be closed with an adhesive, most preferably with a temporary adhesive, such as a glue, or a cement, such as, for example, a temporary cement.

In one or more example methods, arranging the interim prosthesis onto the dental implant may comprise removing the scannable member and/or the temporary abutments from the dental implant after the first scan has been performed. Thereafter, the temporary abutments may be fixed to the interim prosthesis by inserting the temporary abutments into the preformed holes of the interim prosthesis and securing said temporary abutments to the interim prosthesis, using, for example, an adhesive, such as glue, or a cement, preferably a temporary glue or cement. The interim prosthesis may have preformed holes that are large enough to receive the temporary abutments. The position of the holes in the interim prosthesis may be determined based on the information indicative of the location of the one or more dental implants, such as the implant reference coordinates, obtained from the first scan. In one or more example methods, the position of the holes may be obtained from molds that are made prior to implant insertion in the patient's mouth. Thereafter, the holes of the interim prosthesis may be closed with an adhesive, such as a glue or a cement. After the temporary abutments have been fixed to the interim prosthesis, the interim prosthesis may be secured to the dental implant using the temporary abutments and, for example, a fastening mean such as a dental screw.

The method comprises performing a second scan on the interim prosthesis arranged on the plurality of temporary abutments comprising the respective scannable member to obtain implant reference coordinates in relation to a morphology of the interim prosthesis. The second scan has the advantage to increase the number of data points collected by the scanner during the first scan and will be use as a reference scan for the model of the final prosthesis. Indeed, during the first scan of the edentulous and /or semi-edentulous patient's mouth the scanner will mainly map the soft tissue as it is difficult for the scanner to collect data point of soft tissue, and will collect data points in relation to the plurality of temporary abutments comprising the respective scannable member to obtain implant reference coordinates. During the second scan a second data set is generated which will be the reference for designing the model of the final prosthesis. The second set of data comprise data indicative of the plurality of temporary abutments comprising the respective scannable member to obtain implant reference coordinates and the landscape of the temporary denture, thus providing an accurate model for the final prosthesis. The second data set may be indicative of the one or more implant reference coordinates and a morphology of the interim prosthesis, such as a morphology of a maxillary and/or a mandibular interim prosthesis. By using the same type of temporary abutment for the first scan and the second scan the risk of the scannable member not being arranged in the same position in the first and the second scan can be reduced and/or eliminated. In addition, all data points collected will help design the final prothesis and erase any misalignment or issues noted while scanning the temporary denture, to provide a high quality final prothesis to the patient, without requiring an additional intra oral or extra oral scan.

In one or more example methods, performing the second scan comprises obtaining second scan data, such as the second data set, indicative of the interim prosthesis arranged on the plurality of temporary abutments comprising the respective scannable member. The second scan data can be obtained using the scanner, such as the scanning device. The scanner may be configured to perform the second scan, such as may be configured to obtain, for example using the imaging circuitry and/or the memory circuitry, the second scan data indicative of the interim prosthesis arranged on the plurality of temporary abutments comprising the respective scannable member.

The method comprises generating a model of a final prosthesis based on the first scan, such as based on the first scan data or the first data set, and the second scan such as based on the second scan data or the second data set. In one or more example methods, the model of the final prosthesis may be generated using a computer aided design (CAD) software. The CAD software may be embodied in the form of executable logic routines (for example, lines of code, software programs, etc.) that are stored on a non-transitory computer readable medium (for example, the memory circuitry of the scanner) and are executed by the processor circuitry of the scanner. In one or more example methods, generating the model comprises aligning the position of each scannable members from the first scan with the position of each corresponding scannable members from the second scan. In other words, generating the model may comprise superimposing the corresponding scannable members from the first scan and the second scan. The model may comprise information required for producing a high accuracy dental prosthesis specifically adapted to the intraoral morphology of the edentulous and/or semi-edentulous patient, such as information about the position of the implants and/or the existing prosthesis, such as the interim prosthesis, and if possible, information concerning the soft tissue. Thereby, a final prosthesis with an accurate fit with regards to the patient's intraoral morphology may be provided (and subsequently attached to the dental implant) without having to perform a plurality of try-ins to test and adapt the fit of the dental prosthesis. Therefore, the risk of the dental prosthesis having to be remade can be reduced. Furthermore, the wearing comfort for the edentulous and/or semi-edentulous patient may be increased since the fit of the dental prosthesis can be more accurate. In one or more example methods, the scanner may be configured to generate the model of the final prosthesis, such as may be configured to execute the CAD software, for example using the processor circuitry, for generating the final model, based on the first scan data or the first data set and the second scan data or the second data set. In one or more example methods, the scanner is configured to superimpose the scan data indicative of the corresponding scannable members from the first scan and the second scan.

In one or more example methods, the method comprises producing the final prosthesis, such as a final denture, based on the digital model of the final prosthesis. The final prosthesis may be produced by one or more techniques known to the skilled person in the art, such as milling, casting, additive manufacturing, such as 3D-printing, lathing and casting. In one or more example methods, producing the final prosthesis comprises sending, for example via the interface of the scanner, manufacturing instructions for manufacturing the final prosthesis to a computer controlled manufacturing tool, such as a 3D-printer, a lathing machine and/or a casting machine. The manufacturing instructions may comprise data indicative of the model of the final prosthesis. The computer controlled manufacturing tool may be configured to receive, for example via the interface of the computer controlled manufacturing tool, the manufacturing data from the scanner, and to store, for example in the memory circuitry of the computer controlled manufacturing tool, the manufacturing instructions. The computer controlled manufacturing tool may in one or more example methods, be configured to execute, for example by the processor circuitry of the computer controlled manufacturing tool, the manufacturing instructions for producing, such as manufacturing, the final prosthesis.

In one or more example methods, the method comprises removing (such as disassociating) each of the scannable members from the respective temporary abutment of the plurality of temporary abutments. In one or more example methods, such as when the scannable member is screwed onto the temporary abutment, removing comprises unscrewing each of the scannable members from the respective temporary abutment of the plurality of temporary abutments. In one or more example methods, such as when the scannable member is clipped onto the temporary abutment, removing comprises unclipping each of the scannable members from the respective temporary abutment of the plurality of temporary abutments. In one or more example methods, such as when the scannable member is integral with the temporary abutment, removing comprises machining the scannable member of the respective temporary abutment. The scannable members may be machined off the respective temporary abutment by cutting and/or grinding the scannable member of the respective temporary abutment.

A scannable temporary abutment for determining a position of a dental implant is disclosed, the scannable temporary abutment comprising a temporary abutment and a scannable member. The temporary abutment is an abutment used for the fabrication of an interim prosthesis. The temporary abutment can be a temporary abutment known to skilled person in the art, for example, said temporary abutment can be of cylindrical shape. The interim prosthesis may be glued or cemented (e.g. with temporary glue or cement) onto the temporary abutment or the temporary abutment may be incorporated into the interim prosthesis. The scannable member is a member being designed to provide an accurate scanning result. In other words, the scannable member is configured to be detectable by the scanner, such as a scanning device (e.g. an intraoral scanner or a dental scanning wand) and the scanning device is able to match the parameters of the digital scannable member to the physical one with high accuracy. The parameters may be one or more of a height, a width, a length, and a shape of the scannable member. Using different devices for mounting the scannable screw for different scans, such as the scanpost and the temporary abutment, as is done in the known systems may introduce errors between the scans. For example, the scannable screw might not be at the same height in relation to the dental implant in the scans, since the height will depend on how far the scannable screw is screwed into/onto the scanpost in the first scan and the temporary abutment in the second scan. The height may also be dependent on a size, such as a depth of the screw channel, in the scanpost and the temporary abutment used throughout the workflow. The change in height may also introduce differences in the landscaping and the stitching of the scans. The differences in the abutments used, such as between the scanpost and the temporary abutment, may also introduce differences in the angles of the abutments in relation to the dental implants, which may also create mapping differences. The scannable temporary abutment according to the one or more examples disclosed herein has the advantage that the scannable member can be easily positioned, removed, and repositioned on top of the temporary abutment or integrated into the temporary abutment. In addition, the position and height of the scannable member will be fixed by the temporary abutment improving the matching and the superposition of the two scans, compared to a known system where both the scan post and the scannable member (e.g. scannable screws) have to be moved between scans. The scannable temporary abutment according to this disclosure is configured to be used for both a scan without the interim prosthesis arranged on the dental implant and a scan with the interim prosthesis arranged on the dental implant, thereby reducing the risk of the scannable member not being arranged at the same height and/or angle in relation to the dental implant in the two scans. The scannable temporary abutment according to this disclosure is configured to be mounted to the dental implant. The dental implant may be a dental implant implanted into a mouth, such as into a jawbone, of an edentulous and/or semi-edentulous patient. Scannable temporary abutment can be seen as the temporary abutment comprising or being configured to receive a scannable member. Scannable can be seen as being detectable by a scanner, such as an intraoral scanner, for generating a data set for CAD modelling of the scannable member and/or temporary abutment.

In one or more example scannable temporary abutments, the scannable member has a substantially cylindrical shape and/or a cylindrical shape. Substantially cylindrical can be seen as the main shape of the scannable member being cylindrical but can comprise one or more cutouts or protruding sections. The scannable member may comprise a top surface, a base surface, and a lateral surface. The lateral surface may connect the top surface and the base surface. The base surface may be a bottom surface. The top surface may be a surface facing away from the dental implant when the scannable member is arranged to the dental implant via the temporary abutment. The top surface may be a surface facing the dental implant when the scannable member is arranged to the dental implant via the temporary abutment.

In one or more example scannable temporary abutments, the scannable member comprises a position indicator being configured to be detectable by a scanner, such as by an intraoral scanner. The position indicator may be a surface that differs from the adjacent surfaces. The position indicator may be a planar surface, such as a facet. The planar surface may extend from the top surface of the scannable member to the lateral surface of the scannable member at a first angle to a longitudinal axis of the scannable member. By adding the position indicator to the scannable member, the shape of the scannable member may be rendered non-symmetrical which may increase the detectability of the scannable member by the scanner compared to solutions using scannable screws. The scanner may be configured to perceive and/or detect the angles on the position indicator and may use the angles as coordinates to align the data sets of the scans. The lateral surface of the scannable member may be an envelope surface of the scannable member, such as of the cylindrical scannable member. The position indicator is a planar surface of the scannable member, such as a facet, that is slanted in relation to the lateral surface, such as having a normal axis arranged at a first angle to a longitudinal axis, such as a longitudinal center axis of the scannable member. The first angle may be greater than 0° and smaller than 90°, such that the planar surface is not parallel to the top surface nor the lateral surface.

In one or more example scannable temporary abutments and/or scannable members, the position indicator is L-shaped. The position indicator may be a cut out in the body of the scannable member, such that a surface, such as a first surface, of the position indicator is parallel to a longitudinal axis of the scannable member. In one or more examples a second surface of the position indicator may be substantially perpendicular to the first surface, such as substantially perpendicular to the longitudinal axis of the scannable member.

In one or more example scannable members, the surface of the scannable member may be treated to reduce reflectiveness of the surface, such as a light reflectiveness of the surface. The surface of the scannable member may be, for example, treated by etching, such as using an etching method. Hence, in one or more example scannable members, the scannable member comprises an etched surface. The surface of the scannable member may be etched to increase the roughness of the surface. By increasing the roughness of the scannable member, the scannability of the scannable member can be increased, since the treated surface can be less reflective than an untreated surface. Thereby the reflected light from the scanner, which may otherwise negatively affect the scan result and may prevent the scanner from providing an accurate image of the scanned objects, can be reduced. Scannability can be seen as how well the scannable member can be detected by the scanner. A device having poor scannability may not be detectable by the scanner or may provide a poor scanning result, such as a poor image quality, by e.g. introducing disturbances into the scanner during the scan. A device having good scannability may be easily detectable by the scanner or may provide a good scanning result, such as a good image quality.

In one or more example scannable temporary abutments, the temporary abutment and/or the scannable member may be made of metal, metal alloy, a composite, and/or polymer. In one or more example scannable temporary abutments, the temporary abutment and/or the scannable member may be made, for example, of polyether ether ketone (PEEK) or polyvinyl alcohol (PVA).

In one or more example scannable temporary abutments, the temporary abutment and/or the scannable member may be made of metal or metal alloy, for example, the temporary abutment and/or the scannable member may be made of titanium and/or a titanium alloy. The titanium may, in one or more example temporary abutments, be surface treated to increase the roughness of the surface. The advantage of treating the surface of the scannable temporary abutment and/or the scannable member is that roughness of the surface is increased, thus the surface can be made less reflective which can increase the scannability. By increasing the roughness of the surface the reflected light from the scanner, which may otherwise negatively affect the scan result and may prevent the scanner from providing an accurate image of the scanned objects, can be reduced. If the metal surface is to smooth the scanner may not be able to create an accurate image of the scanned object as the light from the scanner may be reflected on the metal surface back to the scanner which may obscure the scanning result. Non-metallic materials, such as composites and/or polymers, have the benefit that the surfaces are less reflective and/or non-reflective, and can therefore improve the scannability of the temporary abutment and/or the scannable member, since less light is reflected back to the scanner.

In one or more example scannable temporary abutments, the scannable member comprises a base, such as a base section, configured to clip onto the temporary abutment. The base of the scannable member may, in one or more example scannable temporary abutments, be configured to receive the temporary abutment. The base of the scannable member may comprise a hollow portion, such as a cavity, and may clip onto the temporary abutment by receiving the temporary abutment in the hollow portion.

The scannable member may have an outer diameter in the range of 4,0-4,8 mm, such as in the range of 4,2-4,6 mm. The scannable member may have a length, such as an extension in a longitudinal direction of the scannable member, in the range of 2,4-5,2 mm.

In one or more example scannable members, the scannable member may comprise a first protrusion, which may also be referred to as a clipping protrusion, configured to engage with the temporary abutment. The first protrusion may be configured to be inserted into a cavity, such as into a throughgoing hole in the top portion of the temporary abutment. The first protrusion may be arranged on the base, such as on a base section, of the scannable member and may extend in a longitudinal direction of the scannable member. The first protrusion may be hollow or solid. The size and shape of the first protrusion may be chosen such that the first protrusion is supported, such as radially supported, by one or more sidewalls of the cavity, such as the throughgoing hole of the temporary abutment. The first protrusion may for example have an outer diameter being equal to the inner diameter of the cavity, such as of the throughgoing hole. In one or more example scannable members, the scannable member may comprise a plurality of protrusions configured to engage with the temporary abutment, such as the first protrusion and a second protrusion. In other words, the scannable member may comprise one or more protrusions configured to engage with the abutment, such as one or more clipping protrusions. The second protrusion may have the same or similar properties, such as size and shape, as the first protrusion. The one or more protrusions, such as the first protrusion and/or the second protrusion, may extend in a radial direction around at least a part of a circumference of the base of the scannable member. In other words, the protrusions may be radial protrusions.

In one or more example scannable members, the base may comprise a groove, such as a body clipping groove or body connecting groove, for receiving the base clipping protrusion. By inserting the body into the base until the base clipping protrusion engages the body clipping groove, the body may be releasably connected to the base. In one or more example scannable members, the base of the scannable member may comprise an insert arranged on an inner surface of the base and being configured to engage with the body off the scannable member. The insert may be a matrix, such as a matrix made of polymer, comprising the groove for receiving the base clipping protrusion of the body. The base clipping protrusion may be hollow or solid. The size and shape of the base clipping protrusion may be chosen such that the base clipping protrusion is supported, by one or more sidewalls of the base. The base clipping protrusion may for example have an outer diameter being equal to an inner diameter of the base.

In one or more example scannable members, the scannable member may comprise a tool receptacle, such as a screw channel, arranged on the top surface of the body of the scannable member. The tool receptacle may be configured to receive a tool, such as a screwdriver, for facilitating connection of the scannable member with the abutment, such as for insertion of the scannable member into the cavity of the abutment. The tool receptacle may have a star shape, such as a torx shape, a hex shape, a Philips shape, a fluted socket shape, a wing shape, such as a tri-wing shape, a square shape, and/or a clutch shape.

In one or more example scannable temporary abutments, the base of the scannable member comprises a plurality of lamellas or wings configured to engage with the temporary abutment. The scannable member may for example comprise two, three, four or five lamellas. The plurality of lamellas may extend in a longitudinal direction from the base of the scannable member. The plurality of lamellas may be configured to be inserted into the cavity, such as into the throughgoing hole in the top portion of the temporary abutment. The plurality of lamellas may be configured to, when inserted into the cavity of the temporary abutment, exert a force in a radial direction of the temporary abutment for securing the scannable member to the temporary abutment. The plurality of lamellas may be evenly distributed on the base of the scannable member. In one or more example scannable temporary abutments, each of the plurality of lamellas may be arranged on the first protrusion of the scannable member.

In one or more example scannable temporary abutments, the temporary abutment and the scannable member may be configured to create a form fit, such as create a mechanical fit. The temporary abutment may, for example, comprise one or more indentations arranged on a surface of the cavity. The one or more indentations may be configured to receive one or more protrusions arranged in a radially outward direction of the scannable member, such as on the lamellas of the scannable member. The scannable member may thus clip onto the temporary abutment by inserting the scannable member into the temporary abutment until the protrusion of the scannable member engages with the indentation of the temporary abutment. Correspondingly, in one or more example scannable temporary abutments, the temporary abutment may comprise the protrusion and the scannable member may comprise the indentation. The protrusion and the indentation engaging with each other may further give to a user of the scannable member, such as a dentist attaching the scannable member to the temporary abutment, tactile feedback indicating that the scannable member is properly seated on the temporary abutment. This can ensure that the scannable member is properly seated on the temporary abutment, and thus located in the same position, for each scan. This ensures that the position of the scannable member is the same in every scan and thus that the images from the plurality of scan can be properly aligned to create the model.

In one or more example scannable temporary abutments, the base of the scannable member comprises a magnet, such as a first magnet, configured to magnetically connect the scannable member to the temporary abutment. In one or more example scannable temporary abutments, the temporary abutment may be made of a magnetic material attracting the magnet of the scannable member. In one or more example scannable temporary abutments, the temporary abutment may comprise a magnet, such as a second magnet, having an opposite pole to the magnet arranged on the scannable member, thereby attracting, and securing the scan body to the temporary abutment. The scannable member may thus be configured to magnetically clip onto the temporary abutment, such as magnetically attract and secure the scannable member to the temporary abutment. The first magnet engaging with the magnetic material and/or the second magnet may give to the user of the scannable member (e.g. the dentist) a tactile feedback indicating that the scannable member is properly seated on the temporary abutment.

In one or more example scannable temporary abutments, the scannable member is configured to be screwed onto the temporary abutment. The scannable member may, in one or more examples, comprise a through hole configured to receive a screw for securing the scannable member to the temporary abutment.

In one or more examples, the scannable member may comprise a thread for threading the scannable member into the temporary abutment. The scannable member may for example comprise an outer thread and the temporary abutment may comprise an inner thread configured to receive the outer thread of the scannable member. Correspondingly, the scannable member may, in one or more example scannable temporary abutments, comprise an inner thread and the temporary abutment may comprise an outer thread configured to receive the inner thread of the scannable member.

In one or more example scannable temporary abutments, the scannable temporary abutment, such as the assembly of the temporary abutment and the scannable member, has a length selected such that the scannable member has a length about similar to the top of the teeth of the interim prothesis when the interim prosthesis is secured to the dental implant via the temporary abutment. In another example, the length of the scannable temporary abutment may be selected such that the scannable member protrudes above the interim prosthesis when the interim prosthesis is secured to the dental implant via the temporary abutment. Said length can be, for example, a length in the range of 5-20mm, such as in the range of 8-14 mm, such as 10-13 mm, such as 11,5 mm.

A kit is disclosed, the kit comprising a scannable member and a screw for securing the scannable member to a temporary abutment.

In the following the solution according to this disclosure will be described in further detail with reference to the figures. The figures are schematic and simplified for clarity, and they merely show details which aid understanding the disclosure, while other details have been left out. Throughout, the same reference numerals are used for identical or corresponding parts.

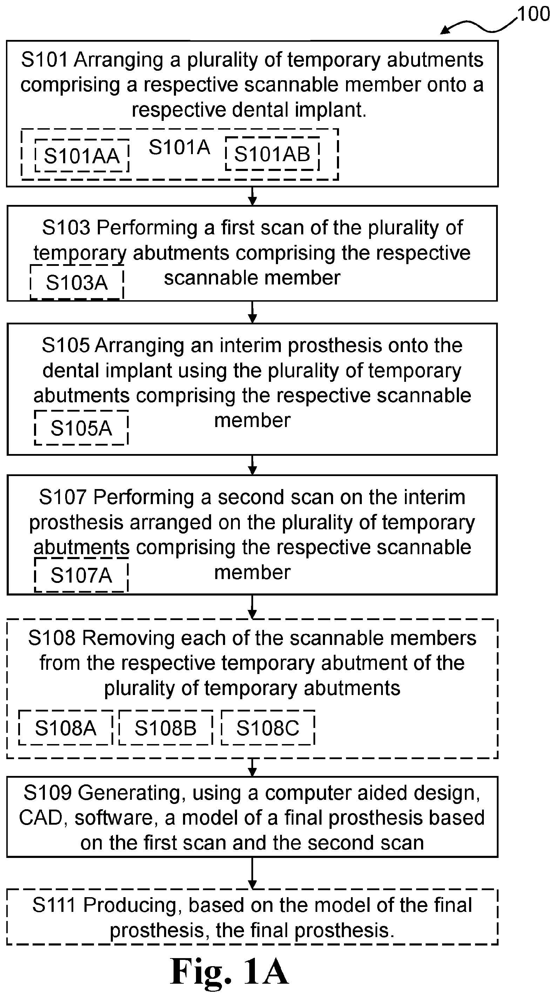

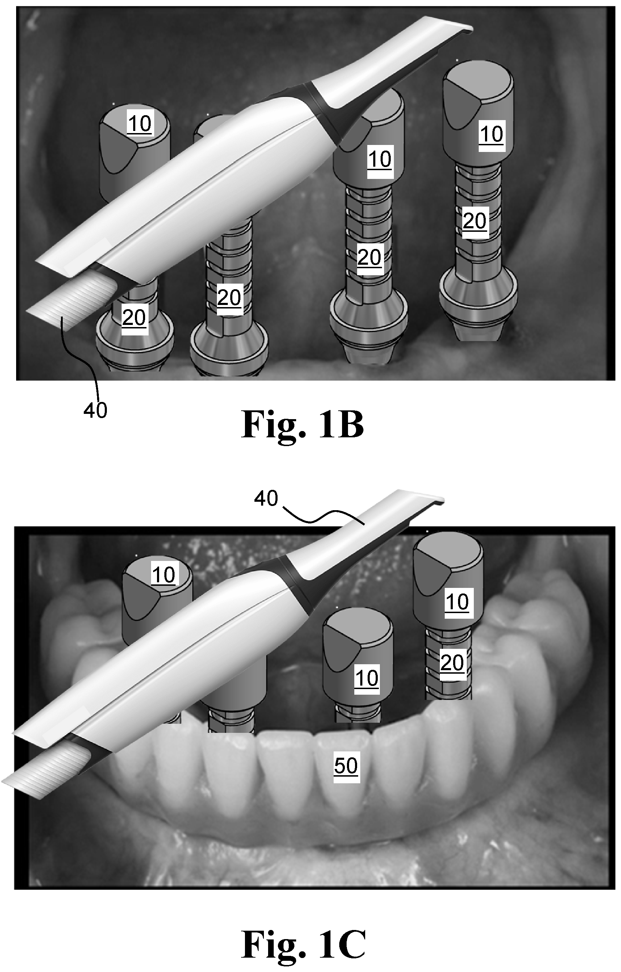

Fig. 1 is a flow chart illustrating an example method for preparing a dental prosthesis according to this disclosure. In one or more example methods, the method comprises arranging S101 a plurality of scannable temporary abutments, such as a plurality of temporary abutments comprising a respective scannable member, onto a respective dental implant. The scannable temporary abutment may be screwed onto the dental implant, subsequently the scannable member may be arranged onto the temporary abutment.

Arranging S101 the plurality of scannable temporary abutments comprising the respective scannable member may, in one or more example methods, comprise arranging S101A the scannable member onto a respective temporary abutment of the plurality of scannable temporary abutments.

In one or more example methods, such as when the scannable member is configured to be screwed onto the scannable temporary abutment, arranging S101A the scannable member onto the respective scannable temporary abutment of the plurality of temporary abutments comprises screwing S101AA the scannable member onto the respective scannable temporary abutment.

In one or more example methods, such as when the scannable member is configured to be clipped onto the scannable temporary abutment, arranging S101A each of the scannable member onto the respective scannable temporary abutment of the plurality of scannable temporary abutments comprises clipping S101AB the scannable member onto the respective scannable temporary abutment.

The method comprises performing S103 a first scan of the plurality of scannable temporary abutments 20 comprising the respective scannable member 10 arranged on the respective dental implant.

In one or more example methods, performing S103 the first scan comprises obtaining S103A first scan data indicative of the plurality of scannable temporary abutments comprising the respective scannable member arranged on the respective dental implant. The first scan data can be obtained using the scanner 40.

An example method for performing S103 the first scan is described in further details with regards to Fig. 1B. The first scan may be performed using a scanner, such as an intraoral scanner. The scanner 40 may scan the plurality of scannable members 10 to generate information indicative of a location of the one or more dental implants in the mouth of an edentulous and/or semi-edentulous patient. During the first scan a first data set is generated. The first data set may be indicative of one or more of implant reference coordinates and a morphology of a jawbone of the edentulous and/or semi-edentulous patient, such as a morphology of the maxillary and/or the mandibular bone of the edentulous and/or semi-edentulous patient. The first scan may be performed without a prosthesis, such as an interim prosthesis, being arranged in the mouth of the patient. The first scan may, in one or more example methods, provide information on a soft tissue of the patient. The method comprises arranging S105 an interim prosthesis onto the dental implant using the plurality of temporary abutments comprising the respective scannable member. After the first scan has been performed the interim prosthesis may be arranged onto the dental implant to perform a second scan comprising the interim prosthesis. Arranging S105 the interim prosthesis onto the dental implant may in one or more example methods comprise embedding S105A the plurality of temporary abutments into the interim prosthesis. The plurality of temporary abutments may be embedded into the interim prosthesis by gluing and/or cementing (e.g. with temporary glue and/or temporary cement) the temporary abutment to the interim prosthesis.

The method comprises performing S107 a second scan on the interim prosthesis arranged on the plurality of temporary abutments comprising the respective scannable member.

In one or more example methods, performing S107 the second scan comprises obtaining S107A second scan data, such as the second data set, indicative of the interim prosthesis arranged on the plurality of temporary abutments comprising the respective scannable member. The second scan data can be obtained using the scanner, such as the scanning device.

An example method for performing S107 the second scan is described in further details with regards to Fig. 1C. The second scan may be performed using the scanner 40, such as the intraoral scanner. The scanner 40 may scan the interim prosthesis 50 together with the plurality of scannable temporary abutments 20 comprising the scannable members 10 to generate information indicative of a location of the interim prosthesis 50 in relation to the one or more dental implants. During the second scan a second data set is generated. The second data set may be indicative of the one or more implant reference coordinates and a morphology of the interim prosthesis 50, such as a morphology of a maxillary and/or a mandibular interim prosthesis.

In one or more example methods, the method comprises removing S108 each of the scannable members from the respective temporary abutment of the plurality of temporary abutments. In one or more example methods, removing S108 each of the scannable members comprises unscrewing S108A each of the scannable members from the respective temporary abutment of the plurality of temporary abutments. This may for example be the case when the scannable member has been screwed onto the temporary abutment.

In one or more example methods, removing S108 each of the scannable members comprises unclipping S108B each of the scannable members from the respective temporary abutment of the plurality of temporary abutments. This may for example be the case when the scannable member has been clipped onto the temporary abutment.

In one or more example methods, such as when the scannable member is integral with the temporary abutment, removing S108 each of the scannable members comprise machining S108C the scannable member off the respective temporary abutment. Each of the scannable members may be machined off the respective temporary abutment by cutting and/or grinding the scannable member off the temporary abutment. The scannable member may be machined off the temporary abutment at a first distance from the top surface of the scannable member. The first distance may be selected such that the remaining length of the temporary abutment does not protrude above the dental prosthesis attached to the temporary abutment, such as does not protrude past the dental prosthesis in a longitudinal direction of the temporary abutment. Machining S108C may be performed intraorally or extraorally. In other words, in one or more example methods, each of the scannable members may be machined off the corresponding temporary abutment while the temporary abutment is arranged on the dental implant. In one or more examples, the temporary abutments may be removed from the dental implant before the scannable member is machined off the temporary abutment.

The method comprises generating S109, using the CAD software, a model of a final prosthesis based on the first scan and the second scan. In one or more example methods, generating S109 the model comprises aligning the position of each of the scannable members from the first scan with the position of each corresponding scannable members from the second scan, such that the position of each respective scannable members and/or temporary abutments in the first scan overlaps with the corresponding, such as the same, scannable members and/or temporary abutments in the second scan. In other words, generating S109 the model may comprise superimposing the corresponding scannable members from the first scan and the second scan.

In one or more example methods, the method comprises producing S111 the final prosthesis, based on the model of the final prosthesis. The final prosthesis may be produced using the CAM software based on the model created by the CAD software. Producing S111 the final prosthesis may comprise one or more of milling, additive manufacturing, such as 3D-printing, lathing and casting.

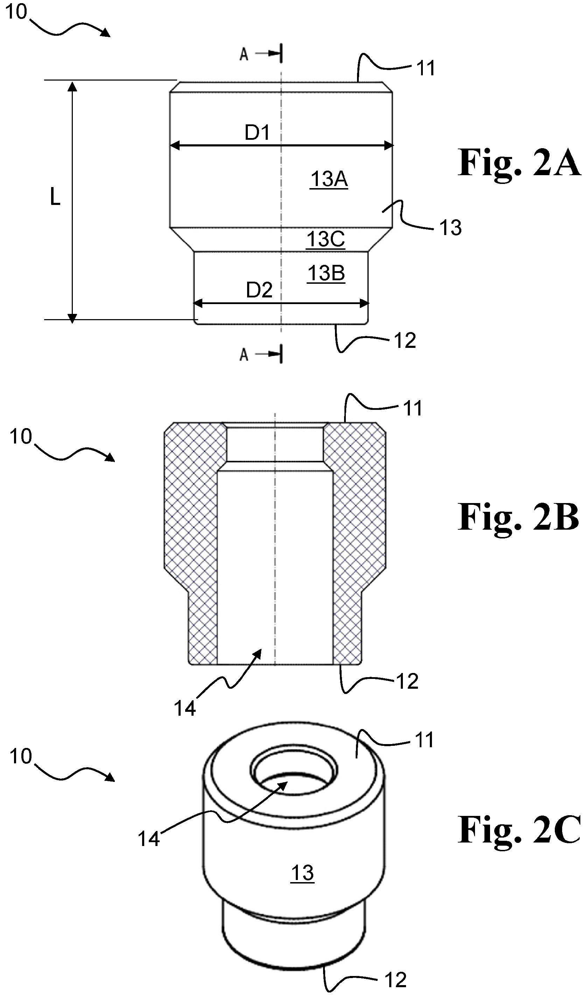

Figs. 2A-2C illustrate a scannable member 10 configured to be arranged on a temporary abutment according to one or more first examples of this disclosure. The scannable member 10 shown in Figs. 2A-2C has a cylindrical shape. The example scannable member 10 comprises a top end 11, a base end 12A (such as a first base end 12A), and a lateral surface 13. The base end may be arranged at a base 12 of the scannable member 10. The lateral surface 13 may connect the top end 11 and the first base end 12A. The lateral surface 13 may change in dimensions from the top end 11 to the base end 12A, such that the base 12 has a different diameter than the top end 11. The top end 11 may comprise a top surface of the scannable member 10, such as a surface facing away from the dental implant when the scannable member 10 is arranged to the dental implant via the temporary abutment. The top end 11 is the end of the scannable member that faces away from the dental implant when the scannable member 10 is arranged on the dental implant via the temporary abutment. The base end 12A of the scannable member 10 may be a bottom surface, such as a surface facing the dental implant when the scannable member 10 is arranged on the dental implant via the temporary abutment.

Fig. 2A shows a side view of the first example scannable member 10. The first example scannable member 10 may have a stepped shape in the longitudinal direction, in particular the lateral surface 13 may have a stepped shape. The stepped shape herein means that the diameter of the scannable member may change along the longitudinal direction of the scannable member. The first example scannable member may have a first diameter D1 towards the top end 11, a second diameter D2 towards the base end 12A and a length L. The first diameter D1 may be in the range of 4,0-4,8 mm, such as in the range of 4,2-4,6 mm. The second diameter D2 may be in the range of 3,4-3,8 mm, such as 3,6 mm. The length L may be in the range of 2,4-5,2 mm.

The lateral surface 13 of the scannable member 10 may thus comprise a first section 13A arranged at the top end 11 and a second section 13B arranged at the base end 12A. The second section 13B of the lateral surface 13 can herein be seen as the base 12. The first section 13A and the second section 13B of the lateral surface may be connected via a third section 13C, such as a slanted section. The third section 13C may have the first diameter D1 at an end connecting to the first section 13A and the second diameter D2 at an end connecting to the second section 13B. The example scannable member 10 shown in Figs. 2A-2C may further comprise a position indicator 15, such as a bevelled surface, (not shown in Fig. 2A-2C). The position indicator 15 may in one or more example scannable members be a bevelled surface extending from the top surface 11 of the scannable member 10 to the lateral surface 13 of the scannable member 10. The lateral surface 13 of the scannable member 10 may be an envelope surface of the scannable member 10, such as of the cylindrical scannable member 10. The bevelled surface 15 is a surface of the scannable member 10 that is slanted in relation to the lateral surface 13, such as is arranged at an angle to the top surface 11 of the scannable member 10.

Fig. 2B shows a sectional view of the example first scannable member 10 along the cut line A-A shown in Fig. 2A. The example first scannable member is hollow, such as comprises a throughgoing hole 14 extending centrally through the scannable member 10 in the longitudinal direction of the scannable member 10. The throughgoing hole 14 may be configured to receive a screw for securing the scannable member 10 to the temporary abutment. The base end 12A of the scannable member 10 may be configured to receive the temporary abutment. The hollow portion, such as the throughgoing hole 14, of the scannable member may have a different diameter at the base end 12A than at the top end 11. The scannable member may be attached to the temporary abutment by inserting the temporary abutment into the throughgoing hole at the base end 12A of the scannable member 10, such that the scannable member clips onto the temporary abutment. The scannable member 10 may thus clip onto the temporary abutment by receiving the temporary abutment in the hollow portion of the scannable member 10.

Fig. 2C shows a perspective view of the example first scannable member 10 of Fig. 2A and 2B.

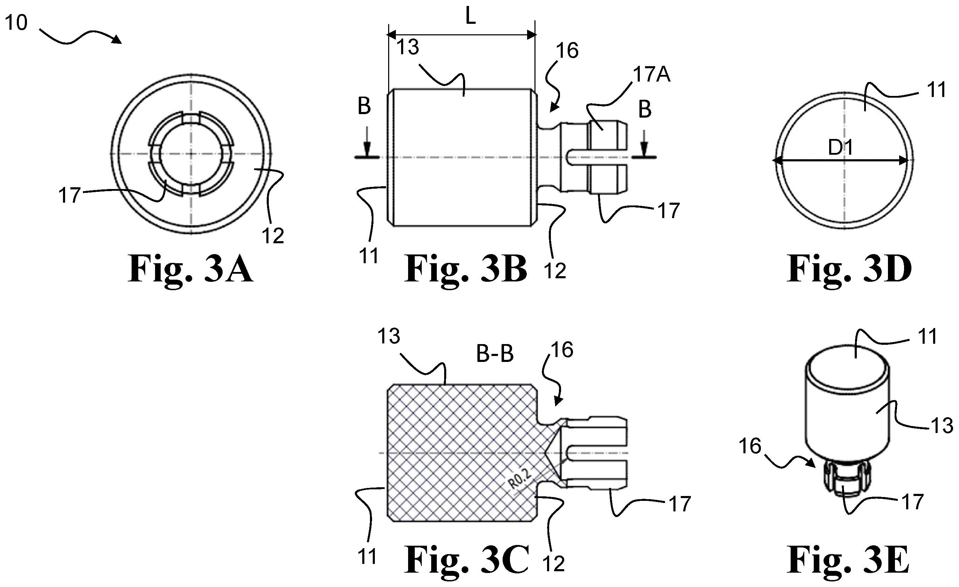

Fig. 3A-3E illustrate a scannable member 10 configured to be arranged on a temporary abutment according to one or more second examples of this disclosure. The example scannable member 10 shown in Figs. 3A-3E, the scannable member 10 comprises a base, such as a base end 12A, configured to clip onto the temporary abutment. The base end 12A of the scannable member 10 may comprise a protrusion 16 protruding from the base end 12A, such as a surface of the base end 12A, of the scannable member 10. The base of the scannable member 10 comprises a plurality of lamellas 17 configured to engage with the temporary abutment. The plurality of lamellas 17 may be arranged on the protrusion 16 or may form the protrusion 16. The scannable member 10 may comprise two, three, four or five lamellas 17. The plurality of lamellas 17 may extend in a longitudinal direction from the base end 12A of the scannable member 10. The plurality of lamellas 17 may be configured to be inserted into a cavity in a top portion of the temporary abutment, such as in a portion of the temporary abutment being distal to the dental implant when the temporary abutment is arranged on the dental implant. The cavity may for example be a throughgoing hole in the scannable temporary abutment. The plurality of lamellas 17 may be configured to, when inserted into the cavity of the temporary abutment, exert a force in a radial direction of the temporary abutment for securing the scannable member to the temporary abutment. The plurality of lamellas may for example be spring loaded. The plurality of lamellas 17 may be evenly distributed on the base of the scannable member 10, such as being arranged at an angular distance of 360°/N, where N is the number of lamellas 17. The example second scannable member 10 shown in Figs. 3A-3E has a substantially cylindrical shape. The scannable member 10 may have a diameter D1 in the range of 4,0-4,8 mm, such as in the range of 4,2-4,6 mm and the length L may be in the range of 2,4-5,2 mm.

Fig. 3A shows a side view of the scannable member 10 seen in the direction of the base end 12A of the scannable member 10. The example scannable member 10 shown in Fig. 3A comprises four lamellas arranged in a circular arrangement. The lamellas are arranged at an angular distance of 90° from each other, though other configurations can be used. Fig. 3B shows a side view of the scannable member 10 seen in a direction perpendicular to the longitudinal axis of the scannable member 10. As can be seen, the lamellas 17 protrude from the base end 12A of the scannable member 10. The lamellas may be arranged on the protrusion 16.

The scannable member 10 may be configured to create a form fit with the temporary abutment. The scannable member 10 may comprise one or more protrusions 17A, such as radial protrusions, arranged in a radially outward direction of the scannable member 10, such as on the lamellas of the scannable member 10, configured to engage one or more indentations arranged on a surface of a cavity of the temporary abutment. The scannable member may thus clip onto the temporary abutment by inserting the scannable member into the temporary abutment until the one or more radial protrusions 17A of the scannable member 10 engages with the indentation of the temporary abutment. Fig. 3C shows a sectional view of the example second scannable member 10 along a cut line B-B shown in Fig. 3B. The example second scannable member is solid, such as has a solid core. Fig. 3D shows a side view of the scannable member 10 seen in the direction of the top surface 11 of the scannable member 10. Fig. 3E shows a perspective view of the example second scannable member 10 of Fig. 3A-3D.

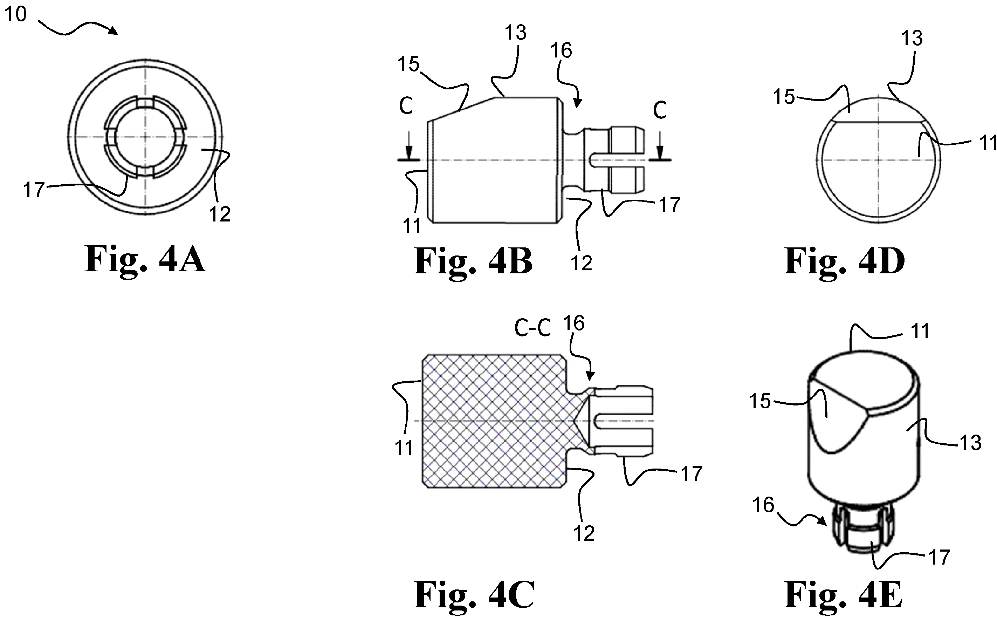

Fig. 4A-4E illustrate a scannable member 10 configured to be arranged on a temporary abutment according to one or more third examples of this disclosure. The example scannable member 10 shown in Figs. 4A-4E is similar to the scannable member according to the one or more second examples shown in Figs. 3A-3E, but differs in that the scannable member 10 comprises a position indicator 15. The position indicator 15, according to the one or more third example scannable members, is a planar surface having a normal axis arranged at a first angle to a longitudinal axis, such as a longitudinal center axis, of the scannable member 10. The position indicator 15 is configured to be detectable by a scanner, such as by an intraoral scanner. In the example scannable member shown in Figs. 4A-4E, the position indicator 15 extends from the top surface 11 of the scannable member 10 towards the lateral surface 13 at the first angle to the longitudinal axis of the scannable member 10. Hence, a plane extending along the planar surface 15 would intersect the longitudinal axis and/or the lateral surface 13. The first angle may be greater than 0° and smaller than 90°, such that the planar surface is not parallel to the top surface 11 nor the lateral surface 13. By providing the scannable member 10 with the position indicator 15, the detectability of the scannable member 10, such as the detectability of the orientation of the scannable member 10, by the scanner may be increased. By increasing the detectability of the scannable member 10 the image processing required for aligning the first scan and the second scan, such as superimposing the first scan and the second scan, to generate the model can be reduced.

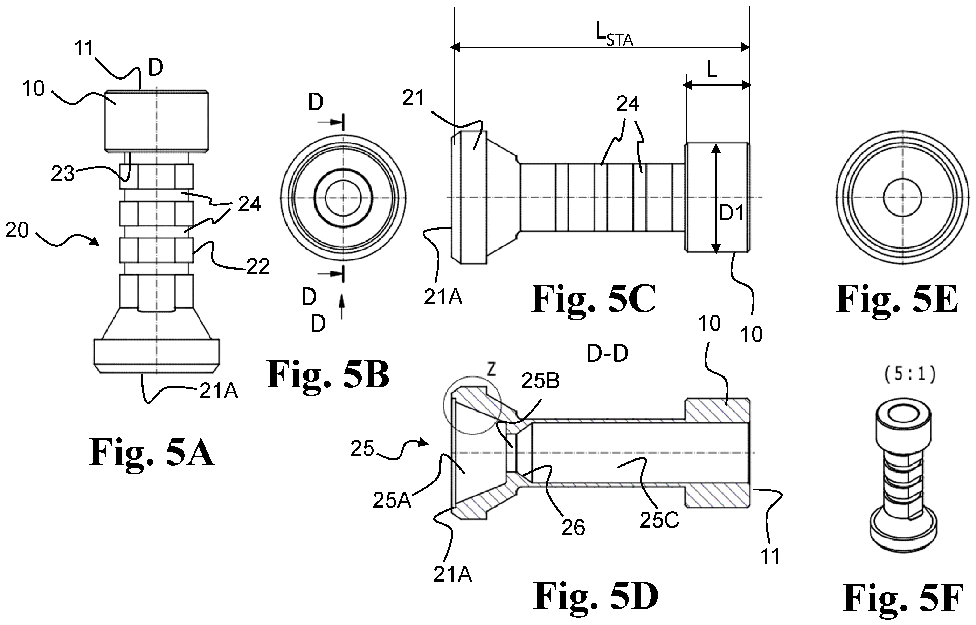

Fig. 5A-5F illustrate a scannable temporary abutment 20 according to one or more examples of this disclosure. The example scannable temporary abutment 20 comprises a scannable member 10. In the example scannable temporary abutment shown in Fig. 5A-5F, the scannable member 10 is integral to (e.g., integral with) the scannable temporary abutment 20. In one or more example scannable temporary abutments, the scannable member may be separate from the temporary abutment and may be configured to clip onto or be screwed to the temporary abutment. The scannable temporary abutment 20 has a base section 21 comprising a base end 21A, an intermediate section 22 and a top end 23. The intermediate section 22 may be arranged between the top end 23 and the base section 21. The intermediate section 22 of the example scannable temporary abutment 20 has a cylindrical shape. The base section 21 of the scannable temporary abutment 20 is configured to be arranged onto a dental implant. The scannable temporary abutment 20 may be configured to be secured to an interim prosthesis for securing the interim prosthesis to the dental implant. The scannable temporary abutment 20 may be secured to the scannable temporary abutment by gluing and/or cementing the temporary abutment 20 to the interim prosthesis 20. To ensure that the interim prosthesis is safely secured to the scannable temporary abutment 20, the intermediate section of the temporary abutment may comprise one or more longitudinal securing means 24 for preventing the interim prosthesis to slide along the temporary abutment 20 in a longitudinal direction of the temporary abutment 20. The longitudinal securing means 24 may be indentations and/or protrusions, such as grooves or ridges, arranged on the outer surface of the intermediate section. When the interim prosthesis is adhered to the scannable temporary abutment, such as by being glued and/or cemented to the temporary abutment, the adhesive, such as the glue and/or cement can engage with the longitudinal securing means and thus prevent the interim prosthesis to move in the longitudinal direction. In the example scannable temporary abutment 20 shown in Fig. 5A, 5C and 5F, the longitudinal securing means 24 are grooves arranged around a circumference of the intermediate section 22 of the scannable temporary abutment 20. The scannable member 10 may be arranged at the top section of the scannable temporary abutment 20.

Fig. 5D shows a sectional view of the example fourth scannable temporary abutment 20 along the cut line D-D shown in Fig. 5B. As can be seen in Fig. 5D, the example scannable temporary abutment 20 is hollow, such as comprises a throughgoing hole 25. The throughgoing hole 25 may extend from the top end 11 of the scannable member 10 to the base end 21A of the scannable temporary abutment 20. The throughgoing hole 25 may be configured to receive a screw for securing the scannable temporary abutment 20 to the dental implant. The throughgoing hole 25 may have a first section 25A having a first diameter, a second section 25B having a second diameter and a third section 25C having a third diameter. The first section 25A of the throughgoing hole 25 may be arranged at the base section 21 of the temporary abutment 20 and may be configured to receive the dental implant. The third section 25C of the throughgoing hole 25 may extend from the top end 11 of the scannable member 10 to the intermediate section 22 of the scannable temporary abutment 20. The third section 25C may be configured to receive a screw and a screwdriver for tightening the screw. The second section 25B of the throughgoing hole 25 may be arranged between the first section 25A and the third section 25C of the throughgoing hole 25. The second section 25B of the throughgoing hole 25 may have a smaller diameter than the first section 25A and the third section 25C of the throughgoing hole, thereby a contact surface 26 for a screw being inserted into the third section 25C of the throughgoing hole 25 is created by the material surrounding the second section 25B of the throughgoing hole 25. Upon tightening the screw into the dental implant, the screw exerts a force on the contact surface 26 securing the scannable temporary abutment 20 to the dental implant.

The scannable temporary abutment 20 and the integral scannable member 10 may be made of a metal or metal alloy, such as, for example, of titanium or a titanium alloy. The titanium may, in one or more example scannable temporary abutments, be surface treated to increase the roughness. Increasing the roughness of the material may render the scannable temporary abutment 20 scannable and/or may increase the scannability of the scannable temporary abutment 20. By surface treating the scannable temporary abutment 20 and/or the scannable member 10 the metal surface can be made less reflective. The surface of the scannable temporary abutment 20 and/or the scannable member 10 may be treated to reduce reflectiveness of the surface, such as a light reflectiveness of the surface. The surface of the scannable temporary abutment 20 and/or the scannable member 10 may for example be treated by etching, such as using an etching method. Hence, in one or more example scannable members, the scannable temporary abutment 20 and/or the scannable member 10 comprises an etched surface. Thereby, the reflected light from the scanner, which may otherwise negatively affect the scan result and may prevent the scanner from providing an accurate image of the scanned objects, can be reduced. If the metal surface is to smooth the scanner may not be able to create an accurate image of the scanned object as the light from the scanner may be reflected on the metal surface.

In one or more example scannable temporary abutments, the scannable temporary abutment 20, such as the assembly of the temporary abutment 20 and the scannable member 10, has a length L_{STA} in the range of 5-14mm. The length of the scannable temporary abutment 20 may be selected such that the scannable member 10 protrudes above the interim prosthesis when the interim prosthesis is secured to the dental implant via the temporary abutment. The scannable member 10 may have a diameter D1 in the range of 4,0-4,8 mm, such as in the range of 4,2-4,6 mm and a length L may the range of 2,4-5,2 mm. Although not disclosed in Figs. 5A-5F, the integral scannable member 10 may in one or more example scannable temporary abutments 20 also comprise the position indicator 15 as disclosed in Figs. 4A-4E.

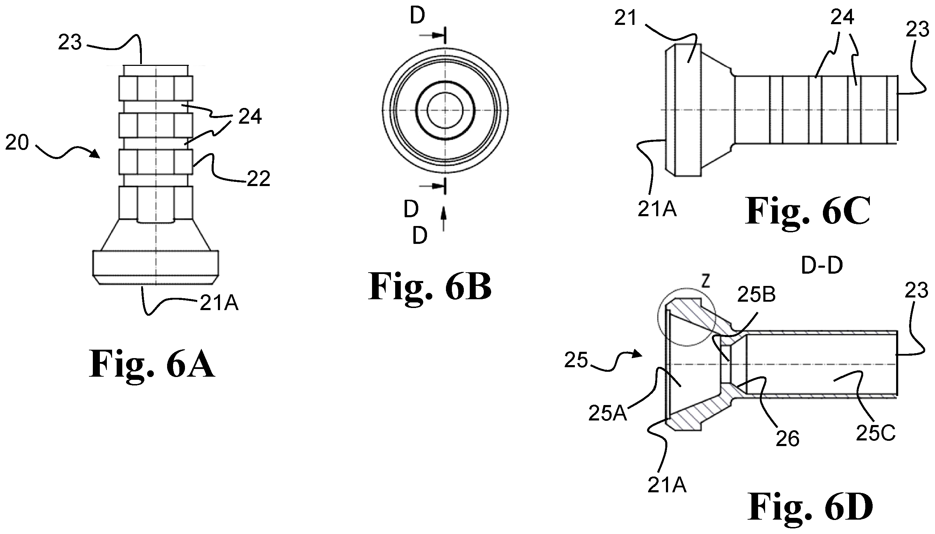

Fig. 6A-6D illustrate a scannable temporary abutment 20 according to one or more examples of this disclosure. The example scannable temporary abutment 20 shown in Figs. 6A-6D corresponds to the scannable temporary abutment 20 shown in Figs. 5A-5F apart from the scannable member not being an integral part of the scannable temporary abutment 20. The top end 23 of the example scannable temporary abutment 20 of Figs. 6A-6D is instead configured to receive and/or secure any of the example scannable members shown in Figs. 2A-4E. The example scannable temporary abutment 20 may be configured to receive and/or secure the scannable member 10 by clipping or screwing the scannable member 10 to the scannable temporary abutment 20. The scannable member 10 may be inserted into the third section 25C of the throughgoing hole 25 of the scannable temporary abutment 20 and may be secured by means of the screw and/or by means of a form fit, such as by the first protrusion and/or the plurality of lamellas engaging with the inside of the throughgoing hole 25. In one or more example scannable temporary abutments, the inner surface of the throughgoing hole 25 comprises a thread configured to engage with the screw for securing the scannable member 10 to the scannable temporary abutment 20 and/or to a thread arranged on the scannable member 10. The scannable member 10 may for example comprise an outer thread and the scannable temporary abutment 20 may comprise an inner thread configured to receive the outer thread of the scannable member 10. Correspondingly, the scannable member 10 may, in one or more example scannable temporary abutments 20, comprise an inner thread and the scannable temporary abutment 20 may comprise an outer thread configured to receive the inner thread of the scannable member 10.

In one or more example scannable temporary abutments, the scannable temporary abutment 20 comprises a magnet configured to engage with a magnet arranged on the scannable member 10 for securing the scannable member 10 to the scannable temporary abutment 20. The magnet of the scannable temporary abutment 20 may have an opposite pole to the magnet arranged on the scannable member 10, thereby attracting, and securing the scannable member 10 to the scannable temporary abutment 20.

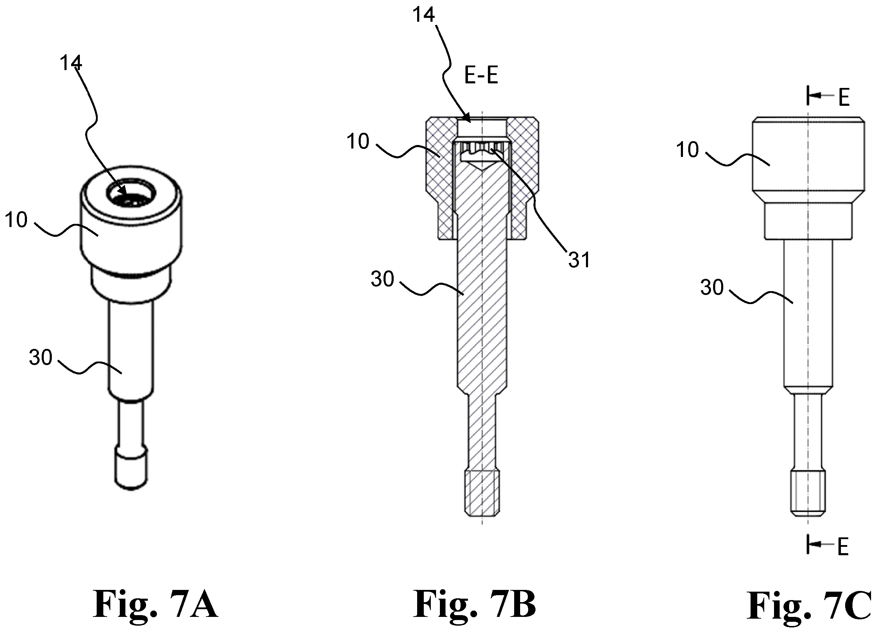

Figs. 7A-7C illustrate a kit comprising a scannable member 10 and a screw 30. The scannable member 10 may be clipped onto the screw 30, such as to a top of the screw 30. The scannable member 10 may for example be the scannable member 10 shown in Figs. 2A-2C, 3A-3E, and/or 4A-4E. The throughgoing hole 14 extending centrally through the scannable member 10 can provide access to a screwdriver. The screwdriver can thus access the screw 30, such as a screwhead 31, via the hole at the top of the scannable member 10 for fastening and/or unfastening the screw to and/or from the scannable temporary abutment 20. In one or more example kits, the kit may also comprise the scannable temporary abutment 20.

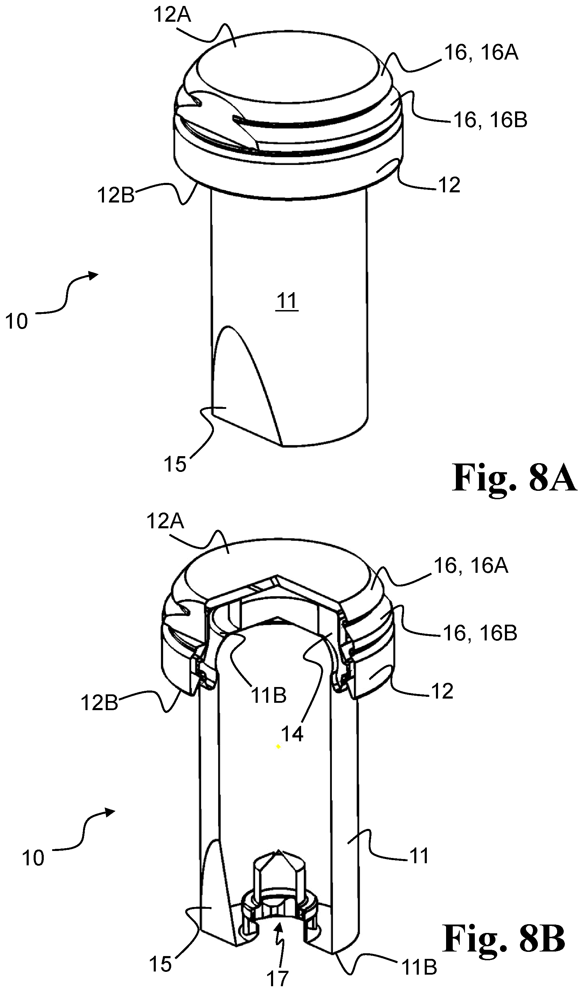

Figs. 8A-8B illustrate a scannable member 10 for determining a position of a dental implant according to one or more examples of this disclosure, the scannable member being configured to be clipped onto the abutment. The scannable member shown in Fig. 5A-5B comprises a plurality of protrusions, such as a first protrusion 16A and a second protrusion 16B, configured to engage with the abutment. The first protrusion 16A and the second protrusion 16B may herein be referred to as clipping protrusions. The first protrusion 16A and the second protrusion 16B are configured to be inserted into a cavity, such as into a throughgoing hole in the implant receptacle of the abutment. The first protrusion 16A and the second protrusion 16B are arranged on the base 12, such as on the base section, of the scannable member 10. The size and shape of the plurality of protrusions may be chosen such that the protrusion is supported, such as radially supported, by one or more sidewalls of the throughgoing hole of the abutment. The first protrusion 16A and the second protrusion 16B may have an outer diameter being equal to the inner diameter of the throughgoing hole. In the example scannable member 10 shown in Figs. 8A and 8B, the plurality of protrusions, such as the first protrusion 16A and the second protrusion 16B, are shaped as lamellas, or wings. The plurality of protrusions, such as the first protrusion 16A and the second protrusion 16B, extend in a radial direction around at least a part of a circumference of the base 12 of the scannable member 10. In other words, the protrusions may be radial protrusions. The plurality of protrusions 16A, 16B can be configured to, when inserted into the cavity of the temporary abutment, such as into a throughgoing hole in the implant receptacle of the temporary abutment, exert a force in a radial direction of the base 12 of the scannable member 10 for securing the scannable member 10 to the abutment. The plurality of protrusions, such as the first protrusion 16A and the second protrusion 16B, may be rigid or flexible. The base 12 may be integral with the scannable member 10 or may be releasably connected to the body 11 of the scannable member 10. By making the base 12 releasably connected to the body 11, a plurality of bases 12 and/or bodies 11 can be combined to create different scannable temporary abutments 20 and/or scannable members 10 representing, such as being configured to connect to, the dental implant used.

Fig. 8B illustrates a scannable member 10 having a base 12 being releasably connected to the body 11. The base 12 may comprise a first base end 12A configured to mate with the implant receptacle of the first dental prosthesis and a second base end 12B configured to mate with the body 11 of the scannable member 10, such as to a base end 11B of the body 11 of the scannable member 10. The example base 12 in Fig. 8B comprises an insert 14 arranged within a cavity, such as on an inner surface, of the base 12 and being configured to engage with the body 11 off the scannable member 10. The cavity may be arranged on the second end 12B of the base 12 and may be configured for receiving the body 11, such as the base end 11B of the body 11. The insert 14 may be a matrix, such as a matrix made of polymer, comprising the groove for receiving the base clipping protrusion of the body. As can be seen in Fig. 8B the scannable member may comprise a tool receptacle 17, such as a screw channel, arranged on the top surface 11A of the body 11 of the scannable member. The tool receptacle may be configured to receive a tool, such as a screw driver, for facilitating connection of the scannable member with the abutment, such as for insertion of the scannable member 10 into the cavity of the abutment. The tool receptacle may have a star shape, such as a torx shape, a hex shape, a Philips shape, a fluted socket shape, a wing shape, such as a tri-wing shape, a square shape, and/or a clutch shape.

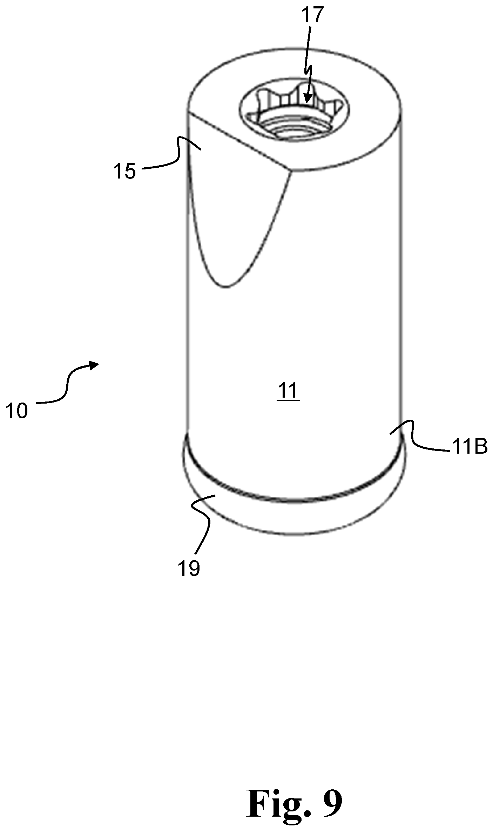

Fig. 9 illustrates a body 11 of the scannable member 10 according to one or more examples of this disclosure. The body 11 is configured to be used with a base, such as the base 12 of Figs. 5A-5B. The body 11 is configured to be releasably connected with the base, such as the base 12 of Figs. 5A-5B. The example scannable member of Fig. 9 comprises a base clipping protrusion 19 configured to engage with the base. The base clipping protrusion 19 is arranged on the base end 11B of the body 11 of the scannable member 10. The base clipping protrusion 19 extends in a radial direction of the body 11. The base clipping protrusion 19 may be arranged around at least a part of the circumference of the body 11. In one or more example bodies, such as in the example body 11 shown in Fig. 9, the base clipping protrusion 19 may be shaped as a collar extending around the entire circumference of the body 11 at the base end 11A of the body 11. The base may comprise a corresponding groove, such as a body clipping groove, for receiving the base clipping protrusion 19. By inserting the body 11 into the base until the base clipping protrusion 19 engages the body clipping groove, the body 11 may be releasably connected to the base. The base clipping protrusion 19 may be hollow or solid. The size and shape of the base clipping protrusion 19 may be chosen such that the base clipping protrusion 19 is supported, by one or more sidewalls of the base 12. The base clipping protrusion 19 may for example have an outer diameter being equal to an inner diameter of the base 12.

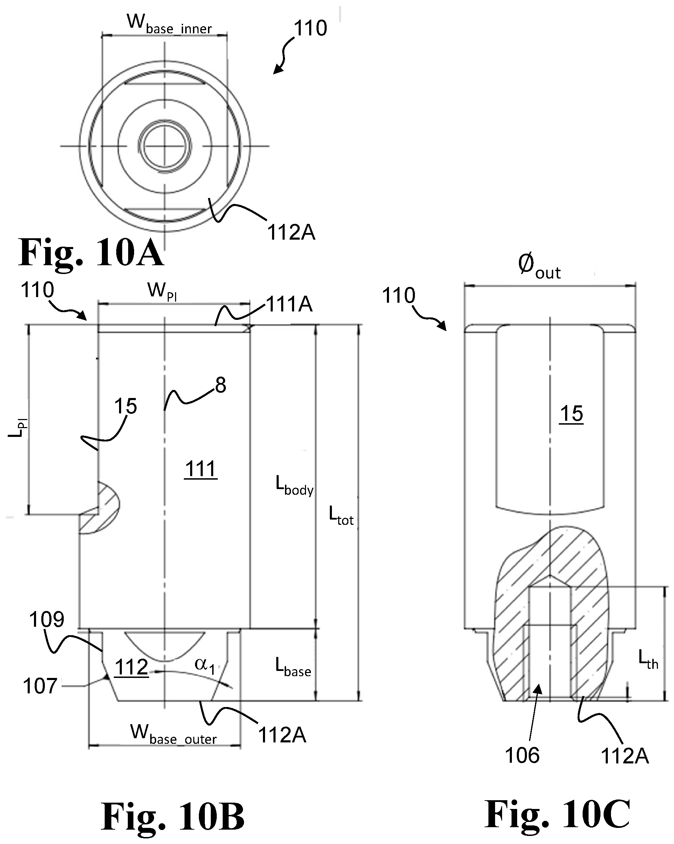

Figs. 10A-10C illustrate an example scannable member 110 according to this disclosure. The scannable member 110 comprises an example body 111, an example base 112, and a position indicator 15. The position indicator 15 may be a cut-out, such as an L-shaped cut-out, in the body 111 of the scannable member. Fig. 10A is a top-down view seen in the direction of the first base end 12A of the base of the scannable member 110. Fig. 10B is a first side view of the scannable member 10 seen in a direction perpendicular to a position indicator 15. Fig. 10C is a second side view of the scannable member 110 seen in a direction of the position indicator 15. The position indicator 15 may in one or more examples, be a cut out in the body 111, such that a first surface 15A of the position indicator 15 is parallel to a longitudinal axis 8 of the scannable member 110. The position indicator may further comprise a second surface 15B being arranged substantially perpendicular to the first surface 15A and/or the longitudinal axis 8 of the scannable member 110. The example scannable member 110 may be configured to be used together with a 4,6 mm diameter platform for dental implants. The example scannable member of Figs. 10A-10C may have an outer diameter Øₒᵤₜ, such as an outer diameter of the body 111, in the range of 4,0-5,0 mm, such as in the range of 4,2-4,7 mm, such as in the range of 4,45-4,55 mm, such as in the range of 4,49-4,51 mm, such as 4,5 mm. The example body 111 of Figs. 10A-10C may have a length L_{body} in the range of 7-9 mm, such as in the range of 7,2-8,8 mm, such as in the range of 7,5-8,5 mm, such as in the range of 7,8-8,2 mm, such as in the range of 7,9-8,1 mm, such as in the range of 7,995-8,005 mm. The positioning indicator 15 arranged in the body 111 may have a length L_{PI} from the top end 11A in the range of 4,8-5,2 mm, such as in the range of 4,9-5,1 mm, such as 4,97-5,03 mm. A width W_{PI} of the body 111 from the positioning indicator 15 in a direction perpendicular to the surface of the positioning indicator at the widest part of the body 111 may be in the range of 3,8-4,2 mm, such as in the range of 3,9-4,1 mm, such as in the range of 3,99-4,01 mm. The base 12 may have a length L_{base} in the range of 1,8-2,0 mm, such as in the range of 1,85-1,95 mm. The base 112 may comprise a first section 107 and a second section 109. The second section 109 extends between the second end 12B of the base 112 and the first section 107. The first section 107 extends between the first base end 12A of the base 112 and the second section 109. In the example base 112 shown in Figs. 10A-10C the second section 109 has a substantially cylindrical shape, such as has a circumferential surface being substantially parallel to the longitudinal axis 8 of the scannable member 110. The first section 107 has a slanted circumferential surface, which is slanted to the longitudinal axis 8 by an angle α₁ in the range of 20-24 degrees, such as in the range of 21-23 degrees, such as in the range of 21,66-22,34 degrees. The base 112 may thus have a conical shape. The base 112 of the example scannable member 110 may have an outer width W_{base_outer} in the range of 3,8-4,2 mm, such as in the range of 3,9-4,1 mm, such as in the range of 3,98-4,02 mm. The base 112 of the example scannable member 110 may have an outer width W_{base_in} in the range of 3,1-3,5 mm, such as in the range of 3,2-3,4 mm, such as in the range of 3,28-3,32 mm. The base 112 of the example scannable member 110 may further comprise a threaded hole 106 arranged on the first end 112A of the base 112 for receiving a screw for securing the scannable member 110 to an abutment. The threaded hole 6 is arranged on the first base end 12A of the base 112. The threaded hole 106 may have a length Lₜₕ, such as an extension along the longitudinal axis 8 of the scannable member in the range of 2,9-3,1 mm, such as in the range of 2,95-3,05 mm. The thread of the threaded hole 106 may have a diameter M1,4. The scannable member 110 may have a total length Lₜₒₜ in the range of 9,5-10,3 mm, such as in the range of 9,7-10,1 mm, such as in the range of 9,8-10 mm, such as 9,9 mm.

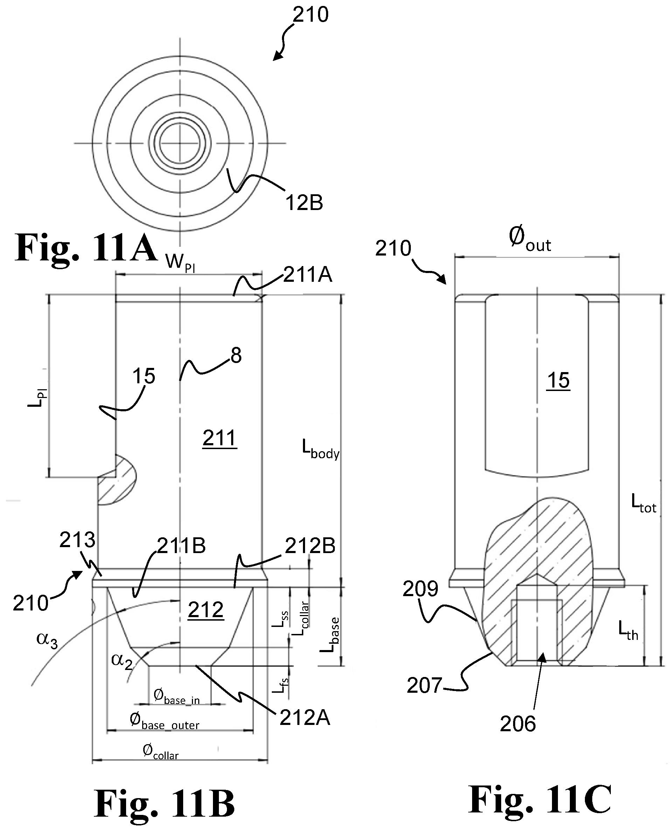

Figs. 11A-11C illustrate an example scannable member 210 according to this disclosure. The scannable member 210 comprises an example body 211, an example base 212, and the position indicator 15. The position indicator 15 may correspond to the position indicator shown in Figs. 10A-10C. Fig. 11A is a top down view seen in the direction of the first base end 12A of the base 212 of the scannable member 10. Fig. 11B is a first side view of the scannable member 210 seen in a direction perpendicular to a position indicator 15. Fig. 11C is a second side view of the scannable member 210 seen in a direction of the position indicator 15. The example scannable member 210 may be configured to be used together with a 4,8mm diameter platform for dental implants. The body 211 of the example scannable member 210 corresponds to the body 111 of the scannable member illustrated in Figs. 10A-10C. In other words, the dimensions Øₒᵤₜ, L_{body}, W_{PI}, and L_{PI} of the body 211 may correspond to the dimensions given in relation to the body 111 in Figs. 10A-10C. The body may comprise a collar 213 arranged at the base end 211B of the body 211. The collar may provide a seating surface for the scannable member in a longitudinal direction. The collar 213 may abut a surface of the abutment when the scannable member 210 is correctly seated in the abutment. The collar 213 may have a diameter Ø_{collar} in the range of 4,75-4,85 mm, such as in the range of 4,78-4,82 mm. The collar 213 may have a length L_{collar} in the range of 0,4-0,6 mm, such as in the range of 0,45-0,55 mm, such as 0,5 mm. The base 212 however differs from the base 211 in that both the first section 207 and the second section 209 of the base 212 are slanted, such are arranged at a respective angle α₂ and α₃ to the longitudinal axis 8 of the scannable member 210. The first section 207 is arranged at the angle α₂ to the longitudinal axis 8, wherein the angle α₂ is in the range of 40-50 degrees, such as in the range of 42-48 degrees, such as in the range of 44-46 degrees, such as 45 degrees. The base 212 may thus have a conical shape. The first section 207 may have a length L_{fs}, such as an extension along the longitudinal axis 8, in the range of 0,4-0,6 mm, such as 0,5 mm. The second section 209 may have a length Lₛₛ, such as an extension along the longitudinal axis 8, in the range of 2,0-2,3 mm, such as in the range of 2,1-2,2 mm, such as in the range of 2,14-2,16 mm. The second section 209 is arranged at the angle α₃ to the longitudinal axis 8, wherein the angle α₃ is in the range of 20-23 degrees, such as in the range of 21-22 degrees, such as in the range of 21,4-21,6 degrees. The base 212 has an outer diameter Ø_{base_outer} at its widest section, which herein is at the second end 12B of the base 212, in the range of 3,8-4,2 mm, such as in the range of 3,9-4,1 mm, such as 4 mm. The base 212 has an inner diameter Ø_{base_in} at its narrowest section, which herein is at the first end 212A of the base 212, in the range of 3,8-4,2 mm, such as in the range of 3,9-4,1 mm, such as 4 mm. The scannable member 210 may have a total length Lₜₒₜ in the in the range of 9,8-10,5 mm, such as in the range of 10-10,3 mm, such as 10,15 mm. The base 212 of the example scannable member 210 of may further comprise a threaded hole 206 arranged for receiving a screw for securing the scannable member to an abutment. The threaded hole 206 is arranged on the first end 212A of the base 212. The threaded hole 206 may have a length Lₜₕ, such as an extension along the longitudinal axis 8 of the scannable member in the range of 2,1-2,3 mm, such as in the range of 2,15-2,25 mm, such as 2,2 mm. The thread of the threaded hole 116 may have a diameter M1,4.

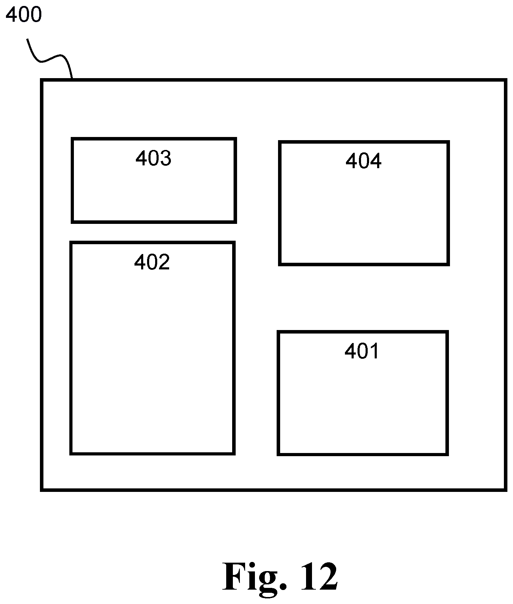

Fig. 12 shows a block diagram of an example scanner 400, such as an intraoral scanner, according to the disclosure. The scanner 400 comprises memory circuitry 401, processor circuitry 402, imaging circuitry 403 and an interface 404. The interface 404 may be a wired or a wireless interface. The scanner 400 may be configured to perform any of the methods disclosed in Fig. 1A. In other words, the scanner 400 may be configured for preparing a dental prosthesis.

The scanner 400 is configured to perform a first scan of a plurality of scannable temporary abutments comprising the respective scannable member arranged on a respective dental implant.

The scanner 400 is configured to perform a second scan of an interim prosthesis arranged on the plurality of scannable temporary abutments comprising the respective scannable member.

The scanner 400 is configured to generate, using a computer aided design, CAD, software, a model of a final prosthesis based on the first scan and the second scan.

In one or more example scanners, the interface 404 is configured for wired or wireless communication with a computer running a CAD-software or with a computer controlled manufacturing tool for producing a final prosthesis.

The scanner 400 is configured to send, for example, via the interface 404, to the computer controlled manufacturing tool, information allowing the computer controlled manufacturing tool to produce a final prosthesis, such as manufacturing instructions for manufacturing of the final prosthesis. The manufacturing instructions may comprise data indicative of the model of the final prosthesis.

Processor circuitry 402 is optionally configured to perform any of the operations disclosed in Fig. 1A (such as any one or more of S101, S101A, S101AA, S101AB, S103, S103A, S105, S105A, S107, S109, S111). The operations of the scanner 400 may be embodied in the form of executable logic routines (for example, lines of code, software programs, etc.) that are stored on a non-transitory computer readable medium (for example, memory circuitry 401) and are executed by processor circuitry 402 and/or imaging circuitry 403).

Furthermore, the operations of the scanner 400 may be considered a method that the scanner 400 is configured to carry out. Also, while the described functions and operations may be implemented in software, such functionality may also be carried out via dedicated hardware or firmware, or some combination of hardware, firmware and/or software.

Memory circuitry 401 may be one or more of a buffer, a flash memory, a hard drive, a removable media, a volatile memory, a non-volatile memory, a random access memory (RAM), or other suitable device. In a typical arrangement, memory circuitry 401 may include a non-volatile memory for long term data storage and a volatile memory that functions as system memory for processor circuitry 402. Memory circuitry 401 may exchange data with processor circuitry 402 over a data bus. Control lines and an address bus between memory circuitry 401 and processor circuitry 402 also may be present (not shown in Fig. 12). Memory circuitry 401 is considered a non-transitory computer readable medium.

Memory circuitry 401 may be configured to store first scan data, second scan data, the model of the final prosthesis and/or manufacturing instructions in a part of the memory.

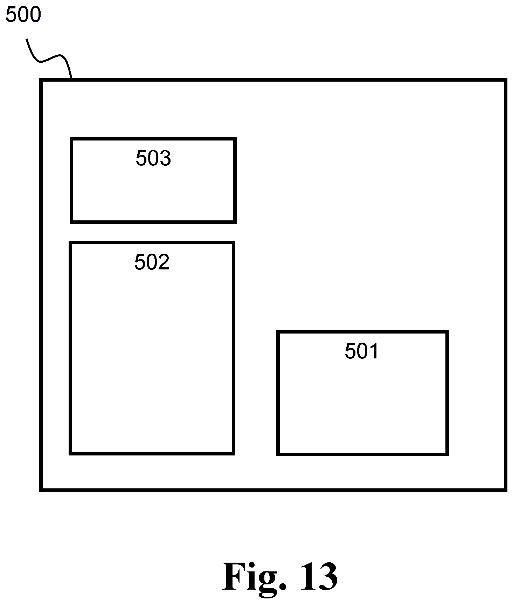

Fig. 13 shows a block diagram of an example computer controlled manufacturing tool 500, such as a 3D-printer, a lathing machine and/or a casting machine, according to the disclosure. The computer controlled manufacturing tool 500 comprises memory circuitry 501, processor circuitry 502, and an interface 503. The interface 503 may be a wired or a wireless interface. The computer controlled manufacturing tool 500 may be configured to perform any of the methods disclosed in Fig. 1A. In other words, the computer controlled manufacturing tool 500 may be configured for preparing a dental prosthesis.

The computer controlled manufacturing tool 500 is configured to produce the final prosthesis based on the model of the final prosthesis.

In one or more example scanners, the interface 503 is configured for wired or wireless communication with a computer running a CAD-software or with a computer controlled manufacturing tool for producing a final prosthesis.

The computer controlled manufacturing tool 500 is configured to receive, for example, via the interface 503, from the scanner 400, information allowing the computer controlled manufacturing tool 500 to produce a final prosthesis, such as manufacturing instructions for manufacturing of the final prosthesis. The manufacturing instructions may comprise data indicative of the model of the final prosthesis.

Furthermore, the operations of the computer controlled manufacturing tool 500 may be considered a method that the computer controlled manufacturing tool 500 is configured to carry out. Also, while the described functions and operations may be implemented in software, such functionality may also be carried out via dedicated hardware or firmware, or some combination of hardware, firmware and/or software.

Memory circuitry 501 may be one or more of a buffer, a flash memory, a hard drive, a removable media, a volatile memory, a non-volatile memory, a random access memory (RAM), or other suitable device. In a typical arrangement, memory circuitry 501 may include a non-volatile memory for long term data storage and a volatile memory that functions as system memory for processor circuitry 502. Memory circuitry 501 may exchange data with processor circuitry 502 over a data bus. Control lines and an address bus between memory circuitry 501 and processor circuitry 502 also may be present (not shown in Fig. 13). Memory circuitry 501 is considered a non-transitory computer readable medium.

Memory circuitry 501 may be configured to store the model of the final prosthesis and/or manufacturing instructions in a part of the memory.

Examples of methods and products (method, scannable temporary abutment and kit) according to the disclosure are set out in the following items:
Item 1A. A method for preparing a dental prosthesis, the method comprising:
   - arranging (S101) a plurality of scannable temporary abutments comprising a respective scannable member onto a respective dental implant,
   - performing (S103) a first scan of the plurality of scannable temporary abutments comprising the respective scannable member,
   - arranging (S105) an interim prosthesis onto the dental implant using the plurality of scannable temporary abutments comprising the respective scannable member,
   - performing (S107) a second scan of the interim prosthesis arranged on the plurality of scannable temporary abutments comprising the respective scannable member, and
   - generating (S109), using a computer aided design, CAD, software, a model of a final prosthesis based on the first scan and the second scan.
Item 1B. A method for preparing a dental prosthesis, the method comprising:
   - performing (S103) a first scan of a plurality of scannable temporary abutments comprising the respective scannable member arranged on a respective dental implant,
   - performing (S107) a second scan on an interim prosthesis arranged on the plurality of scannable temporary abutments comprising the respective scannable member, and
   - generating (S109), using a computer aided design, CAD, software, a model of a final prosthesis based on the first scan and the second scan.
Item 2. The method according to Item 1B, wherein the method comprises:
   - arranging (S101) a plurality of scannable temporary abutments comprising a respective scannable member onto a respective dental implant.
Item 3. The method according to Item 1B or 2, wherein the method comprises:
   arranging (S105) an interim prosthesis onto the dental implant using the plurality of scannable temporary abutments comprising the respective scannable member.
Item 4. The method according to any one of the previous Items, wherein the method comprises:
   - producing (S111) the final prosthesis based on the model of the final prosthesis.
Item 5. The method according to Items 1A or 2, wherein arranging (S101) the plurality of scannable temporary abutments comprising the respective scannable member comprises arranging (S101A) the scannable member onto the respective temporary abutment of the plurality of temporary abutments.
Item 6. The method according to Item 5, wherein arranging (S101A) the scannable member onto the respective temporary abutment of the plurality of temporary abutments comprises screwing (S101AA) the scannable member onto the respective temporary abutment.
Item 7. The method according to Item 5, wherein arranging (S101A) each of the scannable member onto the respective temporary abutment of the plurality of temporary abutments comprises clipping (S101AB) the scannable member onto the respective temporary abutment.
Item 8. The method according to any of the previous Items, wherein the method comprises:
   - removing (S108) each of the scannable members from the respective scannable temporary abutment of the plurality of scannable temporary abutments.
Item 9. The method according to Item 8, wherein removing (S108) comprises unscrewing (S108A) each of the scannable members from the respective scannable temporary abutment of the plurality of scannable temporary abutments.
Item 10. The method according to Item 8, wherein removing (S108) comprises unclipping (S108B) each of the scannable members from the respective scannable temporary abutment of the plurality of scannable temporary abutments.
Item 11. The method according to Item 8, wherein the scannable member is integral with the scannable temporary abutment, and wherein removing (S108) comprises machining (S108C) the scannable member of the respective scannable temporary abutment.
Item 12. The method according to any of the previous Items, wherein arranging (S105) the interim prosthesis onto the dental implant comprises embedding (S105A) the plurality of scannable temporary abutments into the interim prosthesis.
Item 13. The method according to any one of the previous Items, wherein generating (S109) the model comprises aligning the position of each scannable members from the first scan with the position of each corresponding scannable members from the second scan.
Item 14. A scannable temporary abutment for determining a position of a dental implant, the scannable temporary abutment comprising a temporary abutment and a scannable member, said scannable temporary abutment being configured to be mounted to a dental implant.
Item 15. The scannable temporary abutment according to Item 14, wherein the scannable member has a cylindrical shape.
Item 16. The scannable temporary abutment according to Item 14 or 15, wherein the scannable member has a planar surface, the planar surface extending from a top surface of the scannable member to a lateral surface of the scannable member at a first angle to a longitudinal axis of the scannable member.
Item 17. The scannable temporary abutment according to any one of the Items 14 to 16, wherein the scannable member comprises an etched surface.
Item 18. The scannable temporary abutment according to any one of the Items 14 to 17, wherein the scannable member comprises a base configured to clip onto the temporary abutment.
Item 19. The scannable temporary abutment according to Item 18, wherein the base of the scannable member is configured to receive the temporary abutment.
Item 20. The scannable temporary abutment according to Item 18 or 19, wherein the base of the scannable member comprises a plurality of lamellas configured to engage with the temporary abutment.
Item 21. The scannable temporary abutment according to Item 18, wherein the base of the scannable member comprises a magnet configured to magnetically connect the scannable member to the temporary abutment.
Item 22. The scannable temporary abutment according to any one of the Items 14 to 17, wherein the scannable member is configured to be screwed onto the temporary abutment.
Item 23. The scannable temporary abutment according to Item 22, wherein the scannable member comprises a through hole configured to receive a screw for securing the scannable member to the temporary abutment.
Item 24. The scannable temporary abutment according to Item 22, wherein the scannable member comprises a thread for threading the scannable member into the temporary abutment.
Item 25. The scannable temporary abutment according to any one of the Items 14 to 24, wherein the temporary abutment has a length in the range of 5-14mm.
Item 26. A kit comprising a scannable member and a screw for securing the scannable member to a temporary abutment.

The use of the terms "first", "second", "third" and "fourth", "primary", "secondary", "tertiary" etc. does not imply any particular order, but are included to identify individual elements. Moreover, the use of the terms "first", "second", "third" and "fourth", "primary", "secondary", "tertiary" etc. does not denote any order or importance, but rather the terms "first", "second", "third" and "fourth", "primary", "secondary", "tertiary" etc. are used to distinguish one element from another. Note that the words "first", "second", "third" and "fourth", "primary", "secondary", "tertiary" etc. are used here and elsewhere for labelling purposes only and are not intended to denote any specific spatial or temporal ordering. Furthermore, the labelling of a first element does not imply the presence of a second element and vice versa.

It may be appreciated that Figures 1-9 may comprise features or operations which are illustrated with a solid line and some circuitries, components, features, or operations which are illustrated with a dashed line. Operations which are comprised in a solid line are features or operations which are comprised in the broadest example. Features, or operations which are comprised in a dashed line are examples which may be comprised in, or a part of, or are further features, or operations which may be taken in addition to features, or operations of the solid line examples. It should be appreciated that these operations need not be performed in order presented. Furthermore, it should be appreciated that not all of the operations need to be performed. The example operations may be performed in any order and in any combination. It should be appreciated that these operations need not be performed in order presented. Features, or operations which are comprised in a dashed line may be considered optional.

Other operations that are not described herein can be incorporated in the example operations. For example, one or more additional operations can be performed before, after, simultaneously, or between any of the described operations.

Certain features discussed above as separate implementations can also be implemented in combination as a single implementation. Conversely, features described as a single implementation can also be implemented in multiple implementations separately or in any suitable sub-combination. Moreover, although features may be described above as acting in certain combinations, one or more features from a claimed combination can, in some cases, be excised from the combination, and the combination may be claimed as any sub-combination or variation of any sub-combination

It is to be noted that the word "comprising" does not necessarily exclude the presence of other elements or steps than those listed.

It is to be noted that the words "a" or "an" preceding an element do not exclude the presence of a plurality of such elements.

It should further be noted that any reference signs do not limit the scope of the claims, that the examples may be implemented at least in part by means of both hardware and software, and that several "means", "units" or "devices" may be represented by the same item of hardware.

Language of degree used herein, such as the terms "approximately," "about," "generally," and "substantially" as used herein represent a value, amount, or characteristic close to the stated value, amount, or characteristic that still performs a desired function or achieves a desired result. For example, the terms "approximately", "about", "generally," and "substantially" may refer to an amount that is within less than or equal to 10% of, within less than or equal to 5% of, within less than or equal to 1% of, within less than or equal to 0.1% of, and within less than or equal to 0.01% of the stated amount. If the stated amount is 0 (e.g., none, having no), the above recited ranges can be specific ranges, and not within a particular % of the value.

Although features have been shown and described, it will be understood that they are not intended to limit the claimed disclosure, and it will be made obvious to those skilled in the art that various changes and modifications may be made without departing from the scope of the claimed disclosure. The specification and drawings are, accordingly, to be regarded in an illustrative rather than restrictive sense. The claimed disclosure is intended to cover all alternatives, modifications, and equivalents.

## Claims

1. A scannable temporary abutment for determining a position of a dental implant, the scannable temporary abutment comprising a temporary abutment and a scannable member, said scannable temporary abutment being configured to be mounted to a dental implant.

2. The scannable temporary abutment according to claim 1, wherein the scannable member has a cylindrical shape.

3. The scannable temporary abutment according to claim 1 or 2, wherein the scannable member has a planar surface, the planar surface extending from a top surface of the scannable member to a lateral surface of the scannable member at a first angle to a longitudinal axis of the scannable member.

4. The scannable temporary abutment according to claim 1 or 2, wherein the scannable member has a planar surface, the planar surface extending from a top surface of the scannable member parallel to a longitudinal axis of the scannable member.

5. The scannable temporary abutment according to any one of claims 1 to 4, wherein the scannable member comprises an etched surface.

6. The scannable temporary abutment according to any one of claims 1 to 5, wherein the scannable member comprises a base configured to clip onto the temporary abutment.

7. The scannable temporary abutment according to claim 6, wherein the base of the scannable member comprises a plurality of lamellas configured to engage with the temporary abutment.

8. The scannable temporary abutment according to claim 6, wherein the base of the scannable member comprises a magnet configured to magnetically connect the scannable member to the temporary abutment.

9. The scannable temporary abutment according to any one of claims 1 to 5, wherein the scannable member is configured to be screwed onto the temporary abutment.

10. The scannable temporary abutment according to claim 9, wherein the scannable member comprises a through hole configured to receive a screw for securing the scannable member to the temporary abutment.

11. The scannable temporary abutment according to claim 9, wherein the scannable member comprises a thread for threading the scannable member into the temporary abutment.

12. A kit comprising a scannable member and a screw for securing the scannable member to a temporary abutment.
